# EUROPEAN PATENT APPLICATION

(11) **EP 4 192 111 A1**
(43) Date of publication of application: **07.06.2023**
(21) Application number: 21855608.2
(22) Date of filing: 12.08.2021
(51) Int. Cl.: H04W 40/22

(54) **RELAY MANAGEMENT METHOD AND COMMUNICATION APPARATUS**

(30) Priority: 12.08.2020 CN 202010808819
(71) Applicant: Huawei Technologies Co., Ltd., Shenzhen, Guangdong 518129 (CN)
(72) Inventor: XING, Weijun, Shenzhen, Guangdong 518129 (CN); WU, Wenfu, Shenzhen, Guangdong 518129 (CN)
(74) Representative: Huawei European IPR
(86) International application number: PCT/CN2021/112321
(87) International publication number: WO 2022/033558

(57) **Abstract**

Embodiments of this application relate to the communications field, and provide a relay management method and a communication apparatus. A network side may manage and control a relay service requested by a remote device, to prevent the remote device from occupying excessive relay resources and radio resources. The method includes: A network device obtains an identifier of a first terminal device, and obtains relay limitation information of the first terminal device based on the identifier of the first terminal device, where the relay limitation information indicates a quantity of relay devices that can be connected to the first terminal device and/or an aggregate maximum bit rate AMBR that can be used by the first terminal device for a relay; and the network device determines, based on the relay limitation information of the first terminal device, whether to allow the first terminal device to access a network through a second terminal device, where the second terminal device is a relay device of the first terminal device.

## Description

This application claims priority to Chinese Patent Application No. 202010808819.6, filed with the China National Intellectual Property Administration on August 12, 2020 and entitled "RELAY MANAGEMENT METHOD AND COMMUNICATION APPARATUS", which is incorporated herein by reference in its entirety.

### TECHNICAL FIELD

Embodiments of this application relate to the communications field, and in particular, to a relay management method and a communication apparatus.

### BACKGROUND

In a communication network, a terminal device (referred to as a relay terminal device) that establishes a connection to a cellular network may provide wider network coverage for the cellular network through a direct connection interface (for example, a PC5 interface) between the terminal device and another terminal device. For example, a remote device establishes a packet data unit (packet data unit, PDU) session, and a relay device provides a relay service for the remote device by using the PDU session established by the remote device. Alternatively, a relay device establishes a PDU session to provide a relay service for a remote device.

In the foregoing relay scenario, after receiving a relay service request of the remote device, a network side allocates relay resources to the remote device, but cannot manage the relay service of the remote device. As a result, a remote device may occupy excessive relay resources and radio resources.

### SUMMARY

Embodiments of this application provide a relay management method and a communication apparatus. A network side may manage and control a relay service requested by a remote device, to prevent the remote device from occupying excessive relay resources and radio resources.

According to a first aspect, a relay management method is provided. The method includes: A network device obtains an identifier of a first terminal device, and obtains relay limitation information of the first terminal device based on the identifier of the first terminal device, where the relay limitation information indicates a quantity of relay devices that can be connected to the first terminal device and/or an aggregate maximum bit rate AMBR that can be used by the first terminal device for a relay; and the network device may further determine, based on the relay limitation information of the first terminal device, whether to allow the first terminal device to access a network through a second terminal device, where the second terminal device is a relay device of the first terminal device.

An embodiment of this application provides a relay management method, to configure relay limitation information for remote UE (for example, the first terminal device in this embodiment of this application), where the relay limitation information indicates a quantity of relay devices (relay UEs) that can be connected to the remote UE and/or an AMBR that can be used by the remote UE for a relay. Whether to allow the remote UE to connect to a core network through relay UE may be determined based on the relay limitation information of the remote UE. When a quantity of relay devices connected to the remote UE reaches an upper limit, or an AMBR used by the remote UE for a relay reaches an upper limit, a current relay service request of the remote UE is rejected.

With reference to the first aspect, in a first possible implementation of the first aspect, that a network device obtains an identifier of a first terminal device includes: The network device receives a first message from the first terminal device, where the first message includes the identifier of the first terminal device and an identifier of the second terminal device, or the first message includes an identifier of the second terminal device; and the first message indicates that the first terminal device requests to access the network through the second terminal device.

In this application, the remote UE may initiate a relay service request, and the network device receives a message (for example, the first message) indicating that the remote UE initiates a relay service, and may obtain an identifier of the remote UE, to obtain the relay limitation information of the remote UE based on the identifier of the remote UE, so as to manage and control the relay service request of the remote UE, and prevent the remote UE from occupying excessive relay resources.

With reference to the first aspect, in a second possible implementation of the first aspect, that a network device obtains an identifier of a first terminal device includes: The network device receives a first message from the second terminal device, where the first message includes the identifier of the first terminal device and an identifier of the second terminal device, or the first message includes the identifier of the first terminal device; and the first message indicates that the first terminal device requests to access the network through the second terminal device.

In this application, the relay UE may initiate a relay service request, and a message (for example, the first message) indicating that the relay UE initiates a relay service includes an identifier of the remote UE. The network device receives the message, and may obtain the identifier of the remote UE, to obtain the relay limitation information of the remote UE based on the identifier of the remote UE, so as to manage and control a relay service request of the remote UE, and prevent the remote UE from occupying excessive relay resources.

With reference to the first or the second possible implementation of the first aspect, in a third possible implementation of the first aspect, that the network device obtains relay limitation information of the first terminal device based on the identifier of the first terminal device includes: In response to the first message, the network device sends a second message to a unified data management network element, a unified data repository network element, or a policy control network element, where the second message is for requesting the relay limitation information of the first terminal device, and the second message includes the identifier of the first terminal device; and the network device receives the relay limitation information of the first terminal device from the unified data management network element, the unified data repository network element, or the policy control network element.

This application provides a specific implementation in which the network device obtains the relay limitation information. The unified data management network element, the unified data repository network element, or the policy control network element may maintain subscription information of the UE, where the subscription information of the UE includes the relay limitation information, and the policy control network element may maintain policy information of the UE, where the policy information of the UE includes the relay limitation information.

With reference to any one of the first aspect or the first to the third possible implementations of the first aspect, in a fourth possible implementation of the first aspect, that the network device determines, based on the relay limitation information of the first terminal device, whether to allow the first terminal device to access the network through the second terminal device includes: If a quantity of relay devices currently connected to the first terminal device does not exceed the quantity of relay devices that can be connected to the first terminal device, the network device allows the first terminal device to access the network through the second terminal device; or if a quantity of relay devices currently connected to the first terminal device is equal to the quantity of relay devices that can be connected to the first terminal device, the network device disallows the first terminal device to access the network through the second terminal device; and/or if an AMBR currently used by the first terminal device for a relay does not exceed the AMBR that can be used by the first terminal device for a relay, the network device allows the first terminal device to access the network through the second terminal device; or if an AMBR currently used by the first terminal device for a relay is equal to the AMBR that can be used by the first terminal device for a relay, the network device disallows the first terminal device to access the network through the second terminal device.

This application provides a specific implementation of determining, based on the relay limitation information of the first terminal device, whether to allow the first terminal device to access the network through the second terminal device. Whether a current relay status (for example, a quantity of connected relay devices or an AMBR used for a relay) of the first terminal device exceeds an upper limit is determined. If the current relay status does not exceed the upper limit, a current relay service request of the first terminal device is allowed.

With reference to the fourth possible implementation of the first aspect, in a fifth possible implementation of the first aspect, the method further includes: The network device obtains, from the unified data management network element, the unified data repository network element, or the policy control network element, the quantity of relay devices currently connected to the first terminal device and/or the AMBR currently used by the first terminal device for a relay.

This application provides a specific implementation of obtaining a current relay status of the remote UE. The current relay status of the remote UE, for example, a quantity of relay devices currently connected to the first terminal device, and/or an AMBR currently used by the first terminal device for a relay, may be obtained from the unified data management network element, the unified data repository network element, or the policy control network element.

With reference to the fourth or the fifth possible implementation of the first aspect, in a sixth possible implementation of the first aspect, the method further includes: If the network device allows the first terminal device to access the network through the second terminal device, the network device updates the quantity of relay devices currently connected to the first terminal device and/or the AMBR currently used by the first terminal device for a relay, and sends, to the unified data management network element, the unified data repository network element, or the policy control network element, an updated quantity of relay devices currently connected to the first terminal device and/or an updated AMBR currently used by the first terminal device for a relay.

In this application, after the network device allows the remote UE to access a network through the relay device, the network device may further update the current relay status of the remote UE. After the remote UE subsequently initiates a new relay service request, the network device may determine, based on a relay status of the remote UE and the relay limitation information of the remote UE, whether to allow the remote UE to establish an indirect connection to the network through a new relay device.

With reference to the fourth or the fifth possible implementation of the first aspect, in a seventh possible implementation of the first aspect, the method further includes: If the network device allows the first terminal device to access the network through the second terminal device, the network device sends a third message to the unified data management network element, the unified data repository network element, or the policy control network element, so that the unified data management network element, the unified data repository network element, or the policy control network element updates, based on the third message, the quantity of relay devices currently connected to the first terminal device and/or the AMBR currently used by the first terminal device for a relay, where the third message indicates that the network device allows the first terminal device to access the network through the second terminal device.

In this application, after the network device allows the remote UE to access a network through the relay device, the network device may further indicate a UDMIUDR/PCF to update the current relay status of the remote UE. After the remote UE subsequently initiates a new relay service request, the network device may determine, based on a relay status of the remote UE and the relay limitation information of the remote UE, whether to allow the remote UE to establish an indirect connection to the network through a new relay device.

With reference to the seventh possible implementation of the first aspect, in an eighth possible implementation of the first aspect, the third message includes the identifier of the second terminal device.

In this application, the network device may further indicate the UDMIUDR/PCF to store an identifier of a relay device currently connected to the remote UE.

With reference to the fourth or the fifth possible implementation of the first aspect, in a ninth possible implementation of the first aspect, the method further includes: If the network device disallows the first terminal device to access the network through the second terminal device, the network device sends a fourth message to the first terminal device or the second terminal device, where the fourth message indicates that the network device disallows the first terminal device to access the network through the second terminal device.

In this application, the network device may further notify a device initiating the relay service that the relay service is rejected.

With reference to the ninth possible implementation of the first aspect, in a tenth possible implementation of the first aspect, the fourth message includes a failure cause value, where the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

In this application, the network device may further indicate a cause of rejection of the relay service to the device initiating the relay service.

With reference to any one of the first aspect or the first to the tenth possible implementations of the first aspect, in an eleventh possible implementation of the first aspect, the relay limitation information includes first relay limitation information and second relay limitation information, the first relay limitation information includes a quantity of relay devices that can be connected to the first terminal device when the first terminal device performs a first service and/or an AMBR that can be used by the first terminal device for a relay when the first terminal device performs the first service, and the second relay limitation information includes a quantity of relay devices that can be connected to the first terminal device when the first terminal device performs a second service and/or an AMBR that can be used by the first terminal device for a relay when the first terminal device performs the second service.

In this application, different relay limitation information may be further configured for different services of the remote UE, and is applicable to different service scenarios.

With reference to any one of the first aspect or the first to the eleventh possible implementations of the first aspect, in a twelfth possible implementation of the first aspect, the network device is an access and mobility management network element of the first terminal device, a session management network element of the first terminal device, an access and mobility management network element of the second terminal device, or a session management network element of the second terminal device.

With reference to any one of the first aspect or the first to the third possible implementations of the first aspect, in a thirteenth possible implementation of the first aspect, after that the network device obtains relay limitation information of the first terminal device based on the identifier of the first terminal device, the method further includes: The network device sends the relay limitation information to the first terminal device.

In this application, the relay limitation information may further be sent to the remote UE, to limit initiation of a relay connection request by the remote UE.

With reference to any one of the first aspect or the first to the third possible implementations of the first aspect, in a fourteenth possible implementation of the first aspect, after that the network device obtains relay limitation information of the first terminal device based on the identifier of the first terminal device, the method further includes: The network device sends the relay limitation information to an access network device, where the access network device is connected to the first terminal device and/or the second terminal device.

In this application, the relay limitation information may be further sent to the access network device, so that the access network device manages and controls a relay connection request initiated by the remote UE.

In a case in which no conflict occurs between the thirteenth possible implementation and the fourteenth possible implementation of the first aspect, the thirteenth possible implementation and the fourteenth possible implementation may be implemented in combination with any one of the first aspect or the first to the twelfth possible implementations of the first aspect.

This application further provides specific implementations of a network device.

According to a second aspect, a relay management method is provided. The method includes: A UDMIUDR/PCF receives a second message from a network device, where the second message is for requesting relay limitation information of a first terminal device, and the second message includes an identifier of the first terminal device; and sends the relay limitation information of the first terminal device to the network device, where the relay limitation information indicates a quantity of relay devices that can be connected to the first terminal device and/or an aggregate maximum bit rate AMBR that can be used by the first terminal device for a relay.

With reference to the second aspect, in a first possible implementation of the second aspect, the method further includes: sending, to the network device, a quantity of relay devices currently connected to the first terminal device and/or an AMBR currently used by the first terminal device for a relay.

With reference to the second aspect or the first possible implementation of the second aspect, in a second possible implementation of the second aspect, the method further includes: receiving, from the network device, an updated quantity of relay devices currently connected to the first terminal device and/or an updated AMBR currently used by the first terminal device for a relay.

With reference to the second aspect or the first possible implementation of the second aspect, in a second possible implementation of the second aspect, the method further includes: receiving a third message from the network device, where the third message indicates that the network device allows the first terminal device to access a network through a second terminal device; and in response to the third message, updating the quantity of relay devices currently connected to the first terminal device and/or the AMBR currently used by the first terminal device for a relay.

This application further provides specific implementations of a communication apparatus.

According to a third aspect, a communication apparatus is provided, and may be the foregoing network device or a component on the network device. The communication apparatus includes a processing unit, configured to: obtain an identifier of a first terminal device, and obtain relay limitation information of the first terminal device based on the identifier of the first terminal device, where the relay limitation information indicates a quantity of relay devices that can be connected to the first terminal device and/or an aggregate maximum bit rate AMBR that can be used by the first terminal device for a relay; and determine, based on the relay limitation information of the first terminal device, whether to allow the first terminal device to access a network through a second terminal device, where the second terminal device is a relay device of the first terminal device.

With reference to the third aspect, in a first possible implementation of the third aspect, the communication apparatus further includes a communication unit. The processing unit is configured to receive a first message from the first terminal device through the communication unit, where the first message includes the identifier of the first terminal device and an identifier of the second terminal device, or the first message includes an identifier of the second terminal device; and the first message indicates that the first terminal device requests to access the network through the second terminal device.

In this application, remote UE may initiate a relay service request, and the communication apparatus receives a message (for example, the first message) indicating that the remote UE initiates a relay service, and may obtain an identifier of the remote UE, to obtain relay limitation information of the remote UE based on the identifier of the remote UE, so as to manage and control the relay service request of the remote UE, and prevent the remote UE from occupying excessive relay resources.

With reference to the third aspect, in a second possible implementation of the third aspect, that the communication apparatus obtains the identifier of the first terminal device includes: The processing unit receives a first message from the second terminal device through the communication unit, where the first message includes the identifier of the first terminal device and an identifier of the second terminal device, or the first message includes the identifier of the first terminal device; and the first message indicates that the first terminal device requests to access the network through the second terminal device.

In this application, relay UE may initiate a relay service request, and a message (for example, the first message) indicating that the relay UE initiates a relay service includes an identifier of remote UE. The communication apparatus receives the message, and may obtain the identifier of the remote UE, to obtain relay limitation information of the remote UE based on the identifier of the remote UE, so as to manage and control a relay service request of the remote UE, and prevent the remote UE from occupying excessive relay resources.

With reference to the first or the second possible implementation of the third aspect, in a third possible implementation of the third aspect, that the communication apparatus obtains the relay limitation information of the first terminal device based on the identifier of the first terminal device includes: In response to the first message, the processing unit sends a second message to a unified data management network element, a unified data repository network element, or a policy control network element through the communication unit, where the second message is for requesting the relay limitation information of the first terminal device, and the second message includes the identifier of the first terminal device; and receives the relay limitation information of the first terminal device from the unified data management network element, the unified data repository network element, or the policy control network element.

This application provides a specific implementation in which the communication apparatus obtains the relay limitation information. The unified data management network element, the unified data repository network element, or the policy control network element may maintain subscription information of the UE, where the subscription information of the UE includes the relay limitation information.

With reference to any one of the third aspect or the first to the third possible implementations of the third aspect, in a fourth possible implementation of the third aspect, that the communication apparatus determines, based on the relay limitation information of the first terminal device, whether to allow the first terminal device to access the network through the second terminal device includes: If a quantity of relay devices currently connected to the first terminal device does not exceed the quantity of relay devices that can be connected to the first terminal device, the processing unit allows the first terminal device to access the network through the second terminal device; or if a quantity of relay devices currently connected to the first terminal device is equal to the quantity of relay devices that can be connected to the first terminal device, the processing unit disallows the first terminal device to access the network through the second terminal device; and/or if an AMBR currently used by the first terminal device for a relay does not exceed the AMBR that can be used by the first terminal device for a relay, the processing unit allows the first terminal device to access the network through the second terminal device; or if an AMBR currently used by the first terminal device for a relay is equal to the AMBR that can be used by the first terminal device for a relay, the processing unit disallows the first terminal device to access the network through the second terminal device.

This application provides a specific implementation of determining, based on the relay limitation information of the first terminal device, whether to allow the first terminal device to access the network through the second terminal device. Whether a current relay status (for example, a quantity of connected relay devices or an AMBR used for a relay) of the first terminal device exceeds an upper limit is determined. If the current relay status does not exceed the upper limit, a current relay service request of the first terminal device is allowed.

With reference to the fourth possible implementation of the third aspect, in a fifth possible implementation of the third aspect, the processing unit obtains, from the unified data management network element, the unified data repository network element, or the policy control network element through the communication unit, the quantity of relay devices currently connected to the first terminal device and/or the AMBR currently used by the first terminal device for a relay.

This application provides a specific implementation of obtaining a current relay status of the remote UE. The current relay status of the remote UE, for example, a quantity of relay devices currently connected to the first terminal device and/or an AMBR currently used by the first terminal device for a relay, may be obtained from the unified data management network element, the unified data repository network element, or the policy control network element.

With reference to the fourth or the fifth possible implementation of the third aspect, in a sixth possible implementation of the third aspect, the method further includes: If the first terminal device is allowed to access the network through the second terminal device, the processing unit updates the quantity of relay devices currently connected to the first terminal device and/or the AMBR currently used by the first terminal device for a relay; and the processing unit sends, to the unified data management network element, the unified data repository network element, or the policy control network element through the communication unit, an updated quantity of relay devices currently connected to the first terminal device and/or an updated AMBR currently used by the first terminal device for a relay.

In this application, after the communication apparatus allows the remote UE to access a network through the relay device, the communication apparatus may further update the current relay status of the remote UE. After the remote UE subsequently initiates a new relay service request, the communication apparatus may determine, based on a relay status of the remote UE and the relay limitation information of the remote UE, whether to allow the remote UE to establish an indirect connection to the network through a new relay device.

With reference to the fourth or the fifth possible implementation of the third aspect, in a seventh possible implementation of the third aspect, if the first terminal device is allowed to access the network through the second terminal device, the processing unit sends a third message to the unified data management network element, the unified data repository network element, or the policy control network element, so that the unified data management network element, the unified data repository network element, or the policy control network element updates, based on the third message, the quantity of relay devices currently connected to the first terminal device and/or the AMBR currently used by the first terminal device for a relay, where the third message indicates that the communication apparatus allows the first terminal device to access the network through the second terminal device.

In this application, after the communication apparatus allows the remote UE to access a network through the relay device, the communication apparatus may further indicate a UDM/UDR/PCF to update the current relay status of the remote UE. After the remote UE subsequently initiates a new relay service request, the communication apparatus may determine, based on a relay status of the remote UE and the relay limitation information of the remote UE, whether to allow the remote UE to establish an indirect connection to the network through a new relay device.

With reference to the seventh possible implementation of the third aspect, in an eighth possible implementation of the third aspect, the third message includes the identifier of the second terminal device.

In this application, the communication apparatus may further indicate the UDM/UDR/PCF to store an identifier of a relay device currently connected to the remote UE.

With reference to the fourth or the fifth possible implementation of the third aspect, in a ninth possible implementation of the third aspect, if the first terminal device is disallowed to access the network through the second terminal device, the processing unit sends a fourth message to the first terminal device or the second terminal device through the communication unit, where the fourth message indicates that the communication apparatus disallows the first terminal device to access the network through the second terminal device.

In this application, the communication apparatus may further notify a device initiating the relay service that the relay service is rejected.

With reference to the ninth possible implementation of the third aspect, in a tenth possible implementation of the third aspect, the fourth message includes a failure cause value, where the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

In this application, the communication apparatus may further indicate a cause of rejection of the relay service to the device initiating the relay service.

With reference to any one of the third aspect or the first to the tenth possible implementations of the third aspect, in an eleventh possible implementation of the third aspect, the relay limitation information includes first relay limitation information and second relay limitation information, the first relay limitation information includes a quantity of relay devices that can be connected to the first terminal device when the first terminal device performs a first service and/or an AMBR that can be used by the first terminal device for a relay when the first terminal device performs the first service, and the second relay limitation information includes a quantity of relay devices that can be connected to the first terminal device when the first terminal device performs a second service and/or an AMBR that can be used by the first terminal device for a relay when the first terminal device performs the second service.

In this application, different relay limitation information may be further configured for different services of the remote UE, and is applicable to different service scenarios.

With reference to any one of the third aspect or the first to the eleventh possible implementations of the third aspect, in a twelfth possible implementation of the third aspect, the communication apparatus is an access and mobility management network element of the first terminal device, a session management network element of the first terminal device, an access and mobility management network element of the second terminal device, or a session management network element of the second terminal device.

With reference to any one of the third aspect or the first to the third possible implementations of the third aspect, in a thirteenth possible implementation of the third aspect, the communication unit is further configured to send the relay limitation information to the first terminal device.

With reference to any one of the third aspect or the first to the third possible implementations of the third aspect, in a fourteenth possible implementation of the third aspect, the communication unit is further configured to send the relay limitation information to an access network device, where the access network device is connected to the first terminal device and/or the second terminal device.

In a case in which no conflict occurs between the thirteenth possible implementation and the fourteenth possible implementation of the third aspect, the thirteenth possible implementation and the fourteenth possible implementation may be implemented in combination with any one of the third aspect or the first to the twelfth possible implementations of the third aspect.

According to a fourth aspect, a communication apparatus is provided. The communication apparatus includes a processing unit, configured to: receive a second message from a network device through a communication unit, where the second message is for requesting relay limitation information of a first terminal device, and the second message includes an identifier of the first terminal device; and send the relay limitation information of the first terminal device to the network device through the communication unit, where the relay limitation information indicates a quantity of relay devices that can be connected to the first terminal device and/or an aggregate maximum bit rate AMBR that can be used by the first terminal device for a relay.

With reference to the fourth aspect, in a first possible implementation of the fourth aspect, the processing unit is further configured to send, to the network device through the communication unit, a quantity of relay devices currently connected to the first terminal device and/or an AMBR currently used by the first terminal device for a relay.

With reference to the fourth aspect or the first possible implementation of the fourth aspect, in a second possible implementation of the fourth aspect, the processing unit is further configured to receive, from the network device through the communication unit, an updated quantity of relay devices currently connected to the first terminal device and/or an updated AMBR currently used by the first terminal device for a relay.

With reference to the fourth aspect or the first possible implementation of the fourth aspect, in a third possible implementation of the fourth aspect, the processing unit is further configured to receive a third message from the network device through the communication unit, where the third message indicates that the network device allows the first terminal device to access a network through a second terminal device; and the processing unit is further configured to: in response to the third message, update the quantity of relay devices currently connected to the first terminal device and/or the AMBR currently used by the first terminal device for a relay.

This application further provides specific implementations of an access network device.

According to a fifth aspect, a relay management method is provided. The method includes: An access network device receives a seventh message from a first terminal device, where the seventh message indicates that the first terminal device requests to access a network through a second terminal device, and the second terminal device is a relay device of the first terminal device; the access network device obtains relay limitation information of the first terminal device, where the relay limitation information indicates a quantity of relay devices that can be connected to the first terminal device and/or an aggregate maximum bit rate AMBR that can be used by the first terminal device for a relay; and the access network device determines, based on the seventh message and the relay limitation information of the first terminal device, whether to allow the first terminal device to access the network through the second terminal device.

An embodiment of this application provides a relay management method, to configure relay limitation information for remote UE (for example, the first terminal device in this embodiment of this application), where the relay limitation information indicates a quantity of relay devices (relay UEs) that can be connected to the remote UE and/or an AMBR that can be used by the remote UE for a relay. The access network device may determine, based on the relay limitation information of the remote UE, whether to allow the remote UE to connect to a core network through relay UE. When a quantity of relay devices connected to the remote UE reaches an upper limit, or an AMBR used by the remote UE for a relay reaches an upper limit, a current relay service request of the remote UE is rejected.

With reference to the fifth aspect, in a first possible implementation of the fifth aspect, that the access network device determines, based on the seventh message and the relay limitation information of the first terminal device, whether to allow the first terminal device to access the network through the second terminal device, where the second terminal device is a relay device of the first terminal device includes: If a quantity of relay devices currently connected to the first terminal device does not exceed the quantity of relay devices that can be connected to the first terminal device, the access network device allows, based on the seventh message, the first terminal device to access the network through the second terminal device; or if a quantity of relay devices currently connected to the first terminal device is equal to the quantity of relay devices that can be connected to the first terminal device, the access network device disallows, based on the seventh message, the first terminal device to access the network through the second terminal device; and/or if an AMBR currently used by the first terminal device for a relay does not exceed the AMBR that can be used by the first terminal device for a relay, the access network device allows, based on the seventh message, the first terminal device to access the network through the second terminal device; or if an AMBR currently used by the first terminal device for a relay is equal to the AMBR that can be used by the first terminal device for a relay, the access network device disallows, based on the seventh message, the first terminal device to access the network through the second terminal device.

This application provides a specific implementation of determining, based on the relay limitation information of the first terminal device, whether to allow the first terminal device to access the network through the second terminal device. Whether a current relay status (for example, a quantity of connected relay devices or an AMBR used for a relay) of the first terminal device exceeds an upper limit is determined. If the current relay status does not exceed the upper limit, a current relay service request of the first terminal device is allowed.

With reference to the fifth aspect or the first possible implementation of the fifth aspect, in a second possible implementation of the fifth aspect, the method further includes: If the access network device allows the first terminal device to access the network through the second terminal device, the access network device sends an eighth message to a network device, where the eighth message is for requesting to establish or modify a PDU session of the first terminal device.

In this application, when determining to allow the first terminal device to access the network through the second terminal device, the access network device may directly initiate a relay service request to the network device.

With reference to the fifth aspect or the first possible implementation of the fifth aspect, in a third possible implementation of the fifth aspect, the method further includes: If the access network device disallows the first terminal device to access the network through the second terminal device, the access network device sends a ninth message to the first terminal device, where the ninth message indicates that the access network device disallows the first terminal device to access the network through the second terminal device.

In this application, when determining not to allow the first terminal device to access the network through the second terminal device, the access network device may send, to the first terminal device, a message indicating that a relay service request is rejected.

With reference to the third possible implementation of the fifth aspect, in a fourth possible implementation of the fifth aspect, the ninth message includes a failure cause value, where the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

In this application, when the access network device determines not to allow the first terminal device to access the network through the second terminal device, the message that indicates that the relay service request is rejected and that is sent by the access network device to the first terminal device may include the failure cause value, to notify the first terminal device of a cause of a failure of the relay service request.

This application further provides specific implementations of a communication apparatus.

According to a sixth aspect, a communication apparatus is provided. The communication apparatus includes: a communication unit, configured to receive a seventh message from a first terminal device, where the seventh message indicates that the first terminal device requests to access a network through a second terminal device, and the second terminal device is a relay device of the first terminal device; and a processing unit, configured to: obtain relay limitation information of the first terminal device, where the relay limitation information indicates a quantity of relay devices that can be connected to the first terminal device and/or an aggregate maximum bit rate AMBR that can be used by the first terminal device for a relay; and determine, based on the seventh message and the relay limitation information of the first terminal device, whether to allow the first terminal device to access the network through the second terminal device.

With reference to the sixth aspect, in a first possible implementation of the sixth aspect, the processing unit is specifically configured to: if a quantity of relay devices currently connected to the first terminal device does not exceed the quantity of relay devices that can be connected to the first terminal device, allow, based on the seventh message, the first terminal device to access the network through the second terminal device; or if a quantity of relay devices currently connected to the first terminal device is equal to the quantity of relay devices that can be connected to the first terminal device, disallow, based on the seventh message, the first terminal device to access the network through the second terminal device; and/or if an AMBR currently used by the first terminal device for a relay does not exceed the AMBR that can be used by the first terminal device for a relay, allow, for an access network device based on the seventh message, the first terminal device to access the network through the second terminal device; or if an AMBR currently used by the first terminal device for a relay is equal to the AMBR that can be used by the first terminal device for a relay, disallow, for an access network device based on the seventh message, the first terminal device to access the network through the second terminal device.

With reference to the sixth aspect or the first possible implementation of the sixth aspect, in a second possible implementation of the sixth aspect, the communication unit is further configured to: if the first terminal device is allowed to access the network through the second terminal device, send an eighth message to a network device, where the eighth message is for requesting to establish or modify a PDU session of the first terminal device.

With reference to the sixth aspect or the first possible implementation of the sixth aspect, in a third possible implementation of the sixth aspect, the communication unit is further configured to: if the first terminal device is disallowed to access the network through the second terminal device, send a ninth message to the first terminal device, where the ninth message indicates that the access network device disallows the first terminal device to access the network through the second terminal device.

With reference to the third possible implementation of the sixth aspect, in a fourth possible implementation of the sixth aspect, the ninth message includes a failure cause value, where the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

According to a seventh aspect, a communication apparatus is provided, and includes at least one processor and a memory, where the at least one processor is coupled to the memory, and the memory is configured to store a computer program.

The at least one processor is configured to execute the computer program stored in the memory, to enable the apparatus to perform the method according to any one of the first aspect and the implementations of the first aspect, the method according to any one of the second aspect and the implementations of the second aspect, or the method according to any one of the fifth aspect and the implementations of the fifth aspect.

According to an eighth aspect, a computer-readable storage medium is provided. The computer-readable storage medium stores instructions. When the computer-readable storage medium runs on the communication apparatus according to any one of the third aspect and the implementations of the third aspect, the communication apparatus is enabled to perform the communication method according to any one of the first aspect and the implementations of the first aspect.

According to a ninth aspect, a computer-readable storage medium is provided. The computer-readable storage medium stores instructions. When the computer-readable storage medium runs on the communication apparatus according to any one of the fourth aspect and the implementations of the fourth aspect, the communication apparatus is enabled to perform the communication method according to any one of the second aspect and the implementations of the second aspect.

According to a tenth aspect, a computer-readable storage medium is provided. The computer-readable storage medium stores instructions. When the computer-readable storage medium runs on the communication apparatus according to any one of the sixth aspect and the implementations of the sixth aspect, the communication apparatus is enabled to perform the communication method according to any one of the fifth aspect and the implementations of the fifth aspect.

According to an eleventh aspect, a wireless communication apparatus is provided. The communication apparatus includes a processor. For example, the processor is used in the communication apparatus, to implement the method according to any one of the first aspect and the implementations of the first aspect. The communication apparatus may be, for example, a chip system. In a feasible implementation, the chip system further includes a memory, and the memory is configured to store program instructions and data that are necessary for implementing functions of the method according to the first aspect.

According to a twelfth aspect, a wireless communication apparatus is provided. The communication apparatus includes a processor. For example, the processor is used in the communication apparatus, to implement functions or the method according to any one of the second aspect and the implementations of the second aspect. The communication apparatus may be, for example, a chip system. In a feasible implementation, the chip system further includes a memory, and the memory is configured to store program instructions and data that are necessary for implementing the functions of the method according to the second aspect.

According to a thirteenth aspect, a wireless communication apparatus is provided. The communication apparatus includes a processor. For example, the processor is used in the communication apparatus, to implement functions or the method according to any one of the fifth aspect and the implementations of the fifth aspect. The communication apparatus may be, for example, a chip system. In a feasible implementation, the chip system further includes a memory, and the memory is configured to store program instructions and data that are necessary for implementing the functions of the method according to the fifth aspect.

The chip system in the foregoing aspects may be a system-on-a-chip (system-on-a-chip, SoC), a baseband chip, or the like. The baseband chip may include a processor, a channel encoder, a digital signal processor, a modem, an interface module, and the like.

According to a fourteenth aspect, a communication system is provided. The communication system includes a first terminal device, a second terminal device, the communication apparatus according to any one of the third aspect and the possible implementations of the third aspect, the communication apparatus according to any one of the fourth aspect and the possible implementation of the fourth aspect, and the communication apparatus according to any one of the sixth aspect or the possible implementations of the sixth aspect.

### BRIEF DESCRIPTION OF DRAWINGS

FIG. 1 is a diagram of an architecture of a communication system according to an embodiment of this application;
FIG. 2 is a schematic diagram of a protocol stack according to an embodiment of this application;
FIG. 3 is a schematic diagram of a relay according to an embodiment of this application;
FIG. 4 is a schematic diagram of a protocol layer of a layer 2 relay according to an embodiment of this application;
FIG. 5 is a schematic diagram of a session of a layer 2 relay according to an embodiment of this application;
FIG. 6 is a schematic diagram of a protocol layer of a layer 3 relay according to an embodiment of this application;
FIG. 7 is a schematic diagram of a session of a layer 3 relay according to an embodiment of this application;
FIG. 8a is a block diagram of a structure of a communication apparatus according to an embodiment of this application;
FIG. 8b is another block diagram of a structure of a communication apparatus according to an embodiment of this application;
FIG. 9 is a schematic flowchart of a relay management method according to an embodiment of this application;
FIG. 10 is another schematic flowchart of a relay management method according to an embodiment of this application;
FIG. 11 is another schematic flowchart of communication management according to an embodiment of this application;
FIG. 12 to FIG. 15 each are another block diagram of a structure of a communication apparatus according to an embodiment of this application;
FIG. 16 is another schematic flowchart of a relay management method according to an embodiment of this application; and
FIG. 17 and FIG. 18 each are another block diagram of a structure of a communication apparatus according to an embodiment of this application.

### DESCRIPTION OF EMBODIMENTS

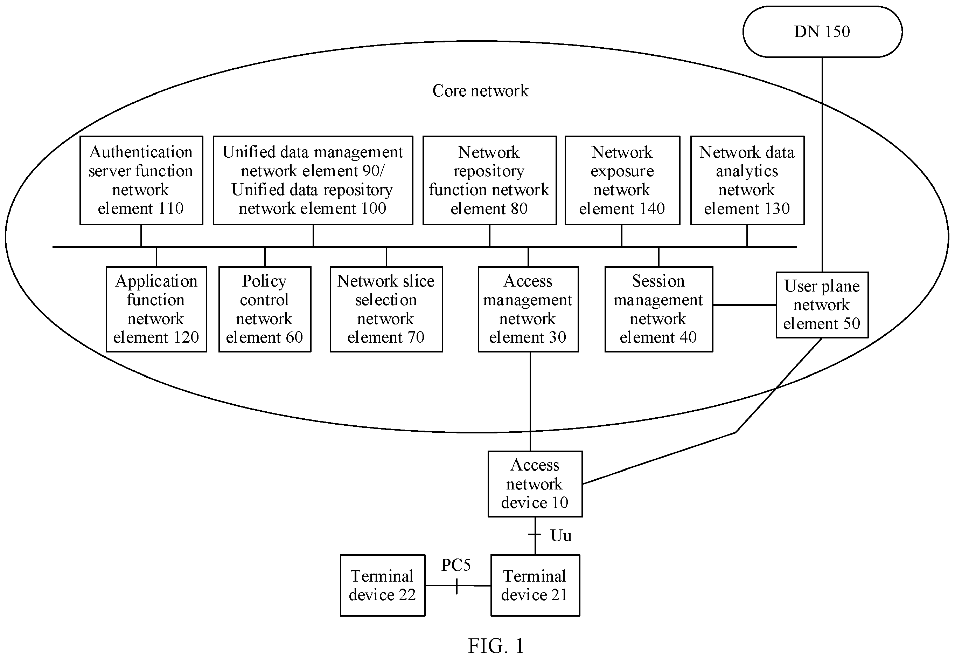

FIG. 1 is a schematic diagram of a network architecture of a communication system to which an embodiment of this application is applicable. The network architecture includes an access network device 10, a terminal device (where only a terminal device 21 and a terminal device 22 are shown in the figure), an access management network element 30, a session management network element 40, a user plane network element 50, a policy control network element 60, a network slice selection network element 70, a network repository function network element 80, a unified data management network element 90, a unified data repository network element 100, an authentication server function network element 110, an application function network element 120, a network data analytics network element 130, a network exposure network element 140, and a data network (data network, DN) 150 connected to an operator network. The terminal device may send service data to the data network and receive service data from the data network through the access network device and the user plane network element.

The terminal device is a device having a wireless transceiver function, and may be deployed on the land, including an indoor or outdoor device, a hand-held device, a wearable device, or a vehicle-mounted device, or may be deployed on the water (for example, on a ship), or may be deployed in the air (for example, on a plane, a balloon, or a satellite). The terminal device may communicate with a core network through a radio access network (radio access network, RAN), and exchange voice and/or data with the RAN. The terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, and the like. A specific technology, a device form, and a name that are used by the terminal device are not limited in embodiments of this application.

The access network device is a device that is in a network and that is configured to connect the terminal device to a wireless network. The access network device may be a node in the radio access network. The access network device may be referred to as a base station or a radio access network (radio access network, RAN) node (or device). A network device may be an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario; or may be a next generation NodeB (next generation NodeB, gNB) in a 5th generation (5th generation, 5G) mobile communication technology new radio (new radio, NR) system; or may be a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a baseband pool BBU pool, a Wi-Fi access point (access point, AP), or the like; or may include a central unit (central unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol.

The access management network element (which may also be referred to as an access and mobility management network element in embodiments of this application) is mainly configured to perform attachment, mobility management, and a tracking area update procedure of a terminal in a mobile network. The access management network element terminates a non-access stratum (non-access stratum, NAS) message, completes registration management, connection management and reachability management, allocates a tracking area list (tracking area list, TA list), completes mobility management and the like, and transparently routes a session management (session management, SM) message to the session management network element. In a 5th generation (5th generation, 5G) communication system, the access management network element may be an access and mobility management function (access and mobility management function, AMF). In a future communication system (for example, a 6G communication system), the mobility management network element may still be an AMF network element, or may have another name. This is not limited in this application.

The session management network element is mainly configured to perform session management in the mobile network, for example, session establishment, modification, and release. A specific function is, for example, allocating an internet protocol (internet protocol, IP) address to the terminal or selecting a user plane network element that provides a packet forwarding function. In the 5G communication system, the session management network element may be a session management function (session management function, SMF). In the future communication system (for example, the 6G communication system), the session management network element may still be an SMF network element, or may have another name. This is not limited in this application.

The user plane network element is mainly configured to process a user packet, where the processing is, for example, forwarding, charging, or lawful interception. The user plane network element may also be referred to as a protocol data unit (protocol data unit, PDU) session anchor (PDU session anchor, PSA). In the 5G communication system, the user plane network element may be a user plane function (user plane function, UPF). In the future communication system (for example, the 6G communication system), the user plane network element may still be a UPF network element, or may have another name. This is not limited in this application.

The policy control network element includes a user subscription data management function, a policy control function, a charging policy control function, quality of service (quality of service, QoS) control, and the like. In the 5G communication system, the policy control network element may be a policy control function (policy control function, PCF). In the future communication system (for example, the 6G communication system), the policy control network element may still be a PCF network element, or may have another name. This is not limited in this application.

The network slice selection function network element is mainly configured to select an appropriate network slice for a service of the terminal device. In the 5G communication system, the network slice selection network element may be a network slice selection function (network slice selection function, NSSF) network element. In the future communication system (for example, the 6G communication system), the network slice selection network element may still be an NSSF network element, or may have another name. This is not limited in this application.

The network repository function network element is mainly configured to provide registration and discovery functions of a network element or a service provided by the network element. In the 5G communication system, the network repository function network element may be a network repository function (network repository function, NRF). In the future communication system (for example, the 6G communication system), the network repository function network element may still be an NRF network element, or may have another name. This is not limited in this application.

The network data analytics network element may collect data from each network function (network function, NF), for example, the policy control network element, the session management network element, the user plane network element, the access management network element, and the application function network element (through the network exposure function network element), and perform analysis and prediction. In the 5G communication system, the network data analytics network element may be a network data analytics function (network data analytics function, NWDAF). In the future communication system (for example, the 6G communication system), the network data analytics network element may still be an NWDAF network element, or may have another name. This is not limited in this application.

The unified data management network element is mainly configured to manage subscription information of the terminal device. In the 5G communication system, the unified data management network element may be a unified data management (unified data management, UDM). In the future communication system (for example, the 6G communication system), the unified data management network element may still be a UDM network element, or may have another name. This is not limited in this application.

The unified data repository network element is mainly configured to store structured data information, including subscription information, policy information, and network data or service data defined in a standard format. In the 5G communication system, the unified data repository network element may be a unified data repository (unified data repository, UDR). In the future communication system (for example, the 6G communication system), the unified data repository network element may still be a UDR network element, or may have another name. This is not limited in this application.

The authentication server function network element is mainly configured to perform security authentication on the terminal device. In the 5G communication system, the authentication server function network element may be an authentication server function (authentication server function, AUSF). In the future communication system (for example, the 6G communication system), the authentication server function network element may still be an AUSF network element, or may have another name. This is not limited in this application.

The network exposure network element may expose some functions of a network to an application in a controlled manner. In the 5G communication system, the network exposure network element may be a network exposure function (network exposure function, NEF). In the future communication system (for example, the 6G communication system), the network exposure network element may still be an NEF network element, or may have another name. This is not limited in this application.

The application function network element may provide service data of various applications for a control plane network element in a communication network of an operator, or obtain data information and control information of a network from a control plane network element in a communication network. In the 5G communication system, the application function network element may be an application function (application function, AF). In the future communication system (for example, the 6G communication system), the application function network element may still be an AF network element, or may have another name. This is not limited in this application.

The data network is mainly configured to provide a data transmission service for the terminal device. The data network may be a private network, for example, a local area network, may be a public data network (public data network, PDN), for example, the Internet (Internet), or may be a dedicated network jointly deployed by operators, for example, a dedicated network deployed to configure an IP multimedia network subsystem (IP multimedia core network subsystem, IMS) service.

It should be understood that the foregoing network elements or the functions may be network elements in a hardware device, software functions running on dedicated hardware, or virtualized functions instantiated on a platform (for example, a cloud platform). Optionally, the foregoing network elements or functions may be implemented by one device, or may be jointly implemented by a plurality of devices, or may be one functional module in one device. This is not specifically limited in embodiments of this application.

For ease of description, an example in which the access management network element is an AMF network element and the network slice selection function network element is an NSSF network element is used for description subsequently in this application. Further, the AMF network element is briefly referred to as an AMF, and the NSSF network element is briefly referred to as an NSSF. To be specific, all AMFs described subsequently in this application may be replaced with access management network elements, and all NSSFFs may be replaced with network slice selection function network elements.

Although not shown in FIG. 1, core network devices of the terminal device 21 and the terminal device 22 may be different. For example, different AMFs separately perform access and mobility management on the terminal device 21 and the terminal device 22, or different SMFs separately perform session management and control on the terminal device 21 and the terminal device 22.

First, terms in embodiments of this application are explained and described.

### (1) Quality of service (quality of service, QoS) parameter

The QoS parameter may be for modifying network QoS, to provide a better service for network communication. For example, the QoS parameter may be modified to resolve problems such as a network delay and congestion, so as to ensure efficient running of a network.

UE may establish PDU sessions for different services, and different services require different QoS parameters. For example, a video service requires high bandwidth, while voice communication requires a reliable and low delay. When the UE initiates a PDU session establishment request or a PDU session update request, an SMF may establish different QoS flows (QoS Flows) for different services based on UE service requirements. The QoS flow may be identified by using a QoS flow identifier (QFI). QoS requirements corresponding to a same QoS flow are the same, and these requirements may be quantized by using QoS parameters. For example, the QoS parameter may be a delay, bandwidth, a packet loss rate, or the like. These QoS parameters may also be identified by using 5G QoS identifiers (5QIs).

Based on the service requirements, the QoS parameter may further include a total flow rate (aggregate maximum bit rate, AMBR). The AMBR includes a UE-AMBR and a session-AMBR. The UE-AMBR is maximum bandwidth that can be reached by all QoS flows corresponding to the UE, and the session-AMBR is maximum bandwidth that can be reached by all QoS flows corresponding to the PDU session.

### (2) Protocol stack

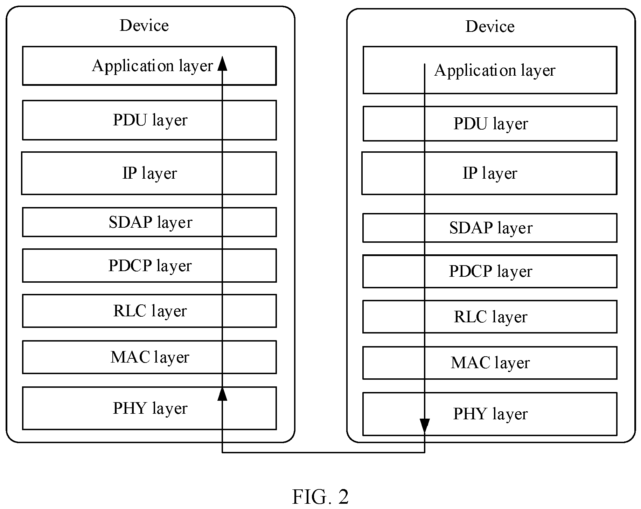

FIG. 2 is a schematic diagram of a protocol stack according to an embodiment of this application. Different devices may interact with each other through the protocol layer shown in FIG. 2. Refer to FIG. 2. The protocol stack includes an application layer (application layer), a protocol data unit (protocol data unit, PDU) layer, a network protocol (internet protocol, IP) layer, a service data adaptation protocol (new radio-service data adaptation protocol, SDAP) layer, a packet data convergence protocol (packet data convergence protocol, PDCP) layer, a radio link control (radio link control, RLC) layer, a media access control (media access control, MAC) layer, and a physical layer (PHY layer).

### (3) Relay (relay)

In embodiments of this application, the relay may be understood as that one terminal device accesses a network through another terminal device, and establishes an indirect connection (indirect connection) to the network. A terminal device that provides a relay service may be referred to as relay UE (relay UE), and a terminal device that accesses a network through the relay may be referred to as remote UE (remote UE).

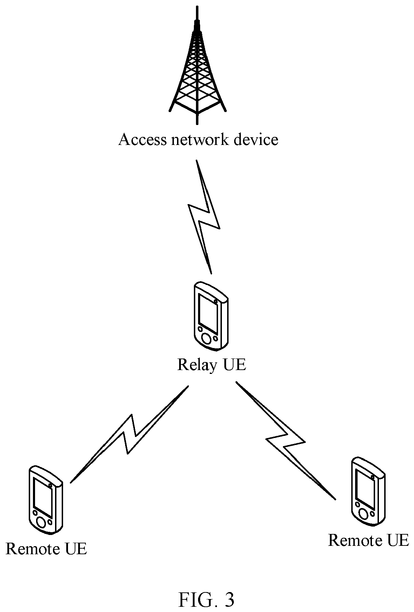

FIG. 3 is a diagram of an architecture of a relay according to an embodiment of this application. Refer to FIG. 3. A remote device (remote UE, also referred to as remote UE) may interact with an access network device, a UPF, and an application server (application server, AS) through a relay device (relay UE, also referred to as relay UE). In the network architecture shown in FIG. 1, the terminal device 21 may serve as the relay UE, and the terminal device 22 may serve as the remote UE. Specifically, the terminal device 21 communicates with the access network device 10 through a Uu link, and the terminal device 21 and the terminal device 22 communicate with each other through a direct link. The terminal device 21 may further provide a relay service for the terminal device 22. For example, the terminal device 21 receives, through a PC5 interface, data sent by the terminal device 22, and forwards the data of the terminal device 22 to the access network device 10. Alternatively, the terminal device 21 receives, through the Uu link, data sent by the access network device to the terminal device 22, and may further forward the received data to the terminal device 22 through a PC5 interface.

### (4) Layer 2 relay (L2 relay)

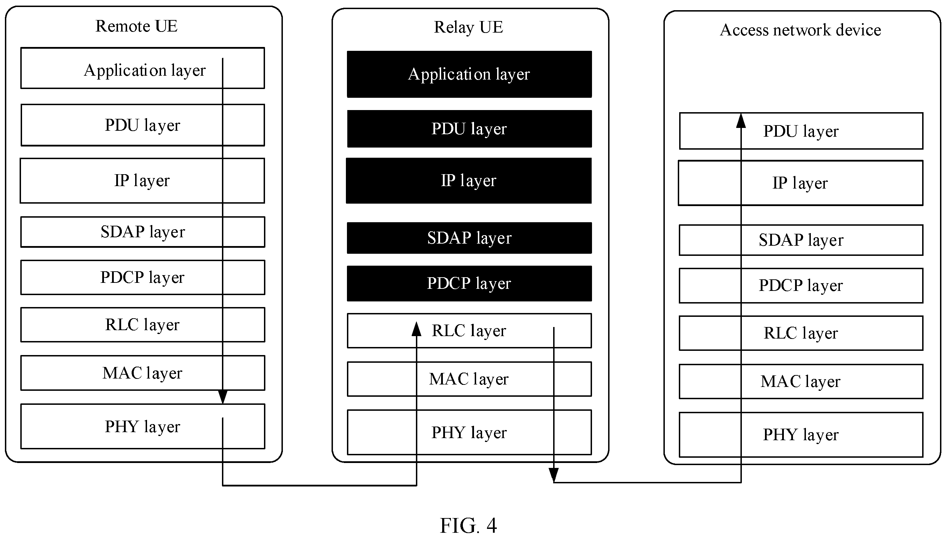

FIG. 4 is a schematic diagram of a protocol stack of a layer 2 relay. Refer to FIG. 4. In a layer 2 relay scenario, when relay UE forwards a data packet for remote UE, after the data packet is processed only below a PDCP layer (the data packet is not processed at the PDCP layer), the relay UE forwards the data packet to an access network device for processing, to ensure data security between the remote UE and the access network device, and prevent excessive data of the remote UE from being exposed to the relay UE.

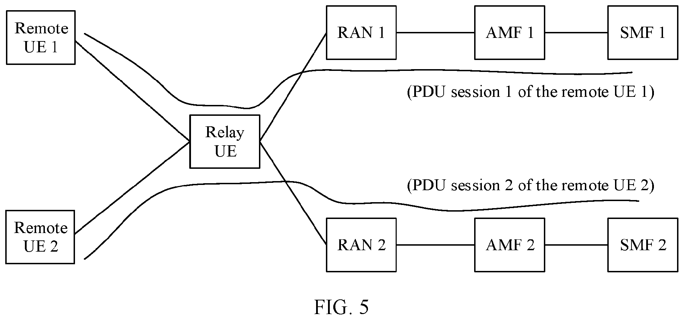

FIG. 5 is a schematic diagram of connection of a layer 2 relay. Refer to FIG. 5. One relay UE may be connected to a plurality of remote UEs and perform layer 2 relay forwarding for these remote UEs. Remote UE 1 establishes a PDU session 1 through the relay UE, and the relay UE may provide a relay service for the remote UE 1 through the PDU session 1 of the remote UE 1. Remote UE 2 establishes a PDU session 2 through the relay UE, and the relay UE may provide a relay service for the remote UE 2 through the PDU session 2 of the remote UE 2. It can be learned that in the layer 2 relay scenario, an SMF of the remote UE performs session management on a relay session.

For the layer 2 relay, when the remote UE connects to a core network through a relay, a core network element (for example, an AMF) may learn that the remote UE connects to the core network in a relay manner. However, the AMF does not manage or control the relay service of the remote UE. For example, the AMF cannot learn whether the remote UE connects to the network through another relay UE, and does not manage or control a current relay service request. As a result, same remote UE may occupy excessive relay resources (for example, relay devices) and bandwidth resources.

### (5) Layer 3 relay (L3 relay)

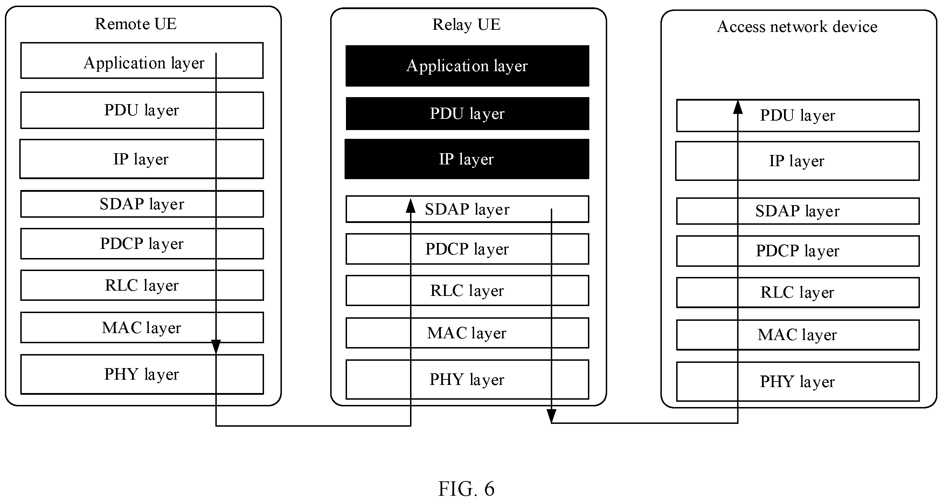

FIG. 6 is a schematic diagram of a protocol stack of a layer 3 relay. Refer to FIG. 6. In a layer 3 relay scenario, when relay UE forwards a data packet for remote UE, after the data packet is processed only below an IP layer (content of the data packet is not processed at the IP layer), the relay UE forwards the data packet to an access network device for processing. The access network device cannot learn whether the relay UE forwards data of the remote UE.

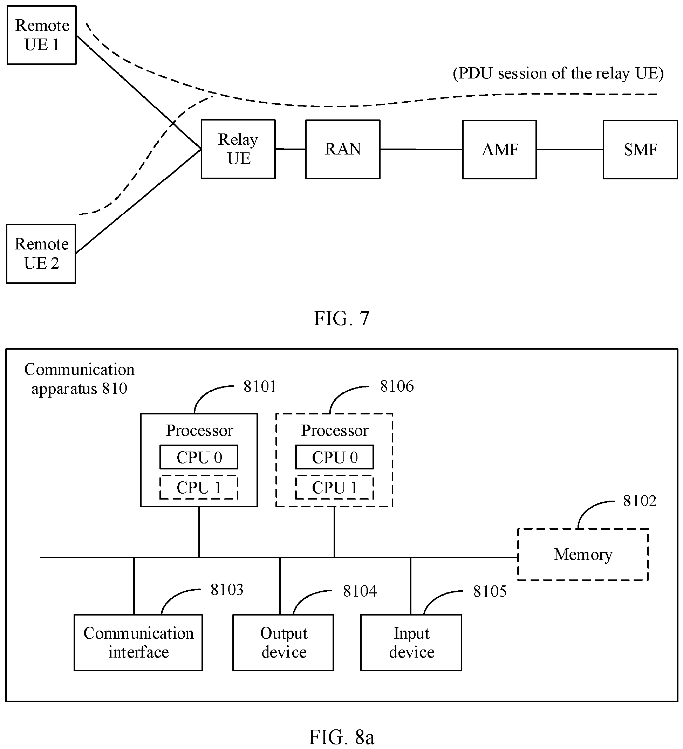

FIG. 7 is a schematic diagram of connection of a layer 3 relay. Refer to FIG. 7. One relay UE may be connected to a plurality of remote UEs and perform layer 3 relay forwarding for these remote UEs. Different from a layer 2 relay scenario, in a layer 3 relay scenario, the relay UE forwards data for the remote UE through a PDU session of the relay UE. It can be learned that in the layer 3 relay scenario, an SMF of the relay UE performs session management on a relay session.

For the layer 3 relay, the SMF establishes or modifies the PDU session for the relay UE, so that the relay UE provides a relay service for the remote UE. The relay UE sends a report of the remote UE to the SMF, and the SMF learns, based on the report of the remote UE, that the remote UE connects to a core network in a relay manner. However, the SMF does not manage or control the relay service of the remote UE. For example, the SMF cannot learn whether the remote UE connects to the network through another relay UE, and does not manage or control a current relay service request. As a result, same remote UE may occupy excessive relay resources (for example, relay devices), bandwidth resources, and the like.

An embodiment of this application provides a relay management method, to configure relay limitation information for remote UE, where the relay limitation information indicates a quantity of relay devices that can be connected to the remote UE and/or an AMBR that can be used by the remote UE for a relay. Whether to allow the remote UE to connect to a core network through relay UE may be determined based on the relay limitation information of the remote UE. When a quantity of relay devices connected to the remote UE reaches an upper limit, or an AMBR used by the remote UE for a relay reaches an upper limit, a current relay service request of the remote UE is rejected.

A terminal device in embodiments of this application may be implemented by a communication apparatus 810 in FIG. 8a. FIG. 8a is a schematic diagram of a hardware structure of a communication apparatus 810 according to an embodiment of this application. The communication apparatus 810 includes a processor 8101 and at least one communication interface (where in FIG. 8a, an example in which a communication interface 8103 is included is merely used for description), and optionally, further includes a memory 8102. The processor 8101, the memory 8102, and the communication interface 8103 are connected to each other.

The processor 8101 may be a general-purpose central processing unit (central processing unit, CPU), a microprocessor, an application-specific integrated circuit (application-specific integrated circuit, ASIC), or one or more integrated circuits for controlling program execution of the solutions of this application.

The communication interface 8103 uses any apparatus such as a transceiver, to communicate with another device or a communication network, for example, the Ethernet, a radio access network (radio access network, RAN), or a wireless local area network (wireless local area network, WLAN).

The memory 8102 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile optical disc, a Blue-ray optical disc, or the like), a magnetic disk storage medium or another magnetic storage device, or any other medium capable of carrying or storing expected program code in a form of instructions or a data structure and capable of being accessed by a computer, but is not limited thereto. The memory may exist independently, or may be connected to the processor. The memory may alternatively be integrated with the processor.

The memory 8102 is configured to store computer-executable instructions for executing the solutions of this application, and the processor 8101 controls execution. The processor 8101 is configured to execute the computer-executable instructions stored in the memory 8102, to implement the relay management method provided in the following embodiments of this application.

Optionally, the computer-executable instructions in this embodiment of this application may also be referred to as application program code. This is not specifically limited in this embodiment of this application.

During specific implementation, in an embodiment, the processor 8101 may include one or more CPUs, for example, a CPU 0 and a CPU 1 in FIG. 8a.

During specific implementation, in an embodiment, the communication apparatus 810 may include a plurality of processors, for example, the processor 8101 and a processor 8106 in FIG. 8a. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 810 may further include an output device 8104 and an input device 8105. The output device 8104 communicates with the processor 8101, and may display information in a plurality of manners. For example, the output device 8104 may be a liquid crystal display (liquid crystal display, LCD), a light emitting diode (light emitting diode, LED) display device, a cathode ray tube (cathode ray tube, CRT) display device, or a projector (projector). The input device 8105 communicates with the processor 8101, and may receive an input of a user in a plurality of manners. For example, the input device 8105 may be a mouse, a keyboard, a touchscreen device, or a sensing device.

The foregoing communication apparatus 810 may be a general-purpose device or a special-purpose device. During specific implementation, the communication apparatus 810 may be a desktop computer, a portable computer, a network server, a palmtop computer (personal digital assistant, PDA), a mobile phone, a tablet computer, a wireless terminal apparatus, an embedded device, or a device having a structure similar to that in FIG. 8a. A type of the communication apparatus 810 is not limited in this embodiment of this application.

It should be noted that the communication apparatus 810 may be an entire terminal, may be a part or component that implements a function of the terminal, or may be a communication chip, for example, a baseband chip. When the communication apparatus 810 is the entire terminal, the communication interface may be a radio frequency module. When the communication apparatus 810 is the communication chip, the communication interface 8103 may be an input/output interface circuit of the chip, where the input/output interface circuit is configured to read and output a baseband signal.

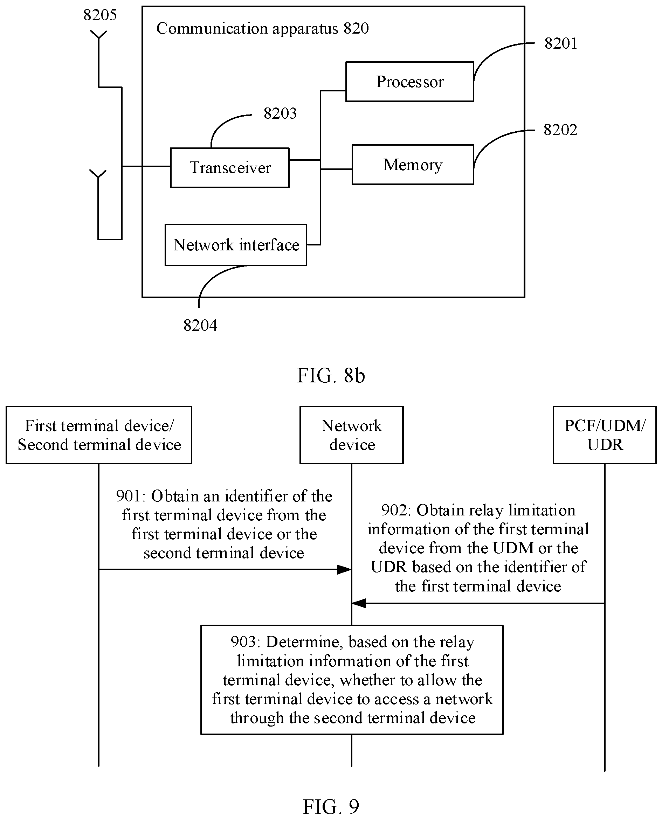

FIG. 8b is a schematic diagram of a structure of a communication apparatus. The communication apparatus 820 may be the network device in embodiments of this application, for example, an AMF or an SMF. Alternatively, the communication apparatus 820 may be the access network device in embodiments of this application, for example, a RAN.

The communication apparatus includes at least one processor 8201, at least one transceiver 8203, at least one network interface 8204, and one or more antennas 8205. Optionally, the communication apparatus further includes at least one memory 8202. The processor 8201, the memory 8202, the transceiver 8203, and the network interface 8204 are connected, for example, through a bus. The antenna 8205 is connected to the transceiver 8203. The network interface 8204 is configured to enable the communication apparatus to connect to another communication device through a communication link. For example, the communication apparatus is connected to a core network element through an S 1 interface. In this embodiment of this application, the connection may include various types of interfaces, transmission lines, buses, or the like. This is not limited in this embodiment.

In this embodiment of this application, the processor such as the processor 8201 may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 8201 may be a single-core (single-CPU) processor or a multi-core (multi-CPU) processor. The at least one processor 8201 may be integrated into one chip or located on a plurality of different chips.

In this embodiment of this application, the memory such as the memory 8202 may include at least one of the following types: a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto.

The memory 8202 may exist independently, and is connected to the processor 8201. Optionally, the memory 8202 may alternatively be integrated with the processor 8201, for example, integrated into a chip. The memory 8202 can store program code for performing the technical solutions in embodiments of this application, and the processor 8201 controls execution of the program code. Various types of executed computer program code may also be considered as drivers of the processor 8201. For example, the processor 8201 is configured to execute the computer program code stored in the memory 8202, to implement the technical solutions in embodiments of this application.

The transceiver 8203 may be configured to support receiving or sending of a radio frequency signal between the communication apparatus and a terminal device, and the transceiver 8203 may be connected to the antenna 8205. Specifically, the one or more antennas 8205 may receive a radio frequency signal. The transceiver 8203 may be configured to: receive the radio frequency signal from the antenna, convert the radio frequency signal into a digital baseband signal or a digital intermediate frequency signal, and provide the digital baseband signal or the digital intermediate frequency signal for the processor 8201, so that the processor 8201 further processes the digital baseband signal or the digital intermediate frequency signal, for example, performs demodulation processing and decoding processing. In addition, the transceiver 8203 may be configured to: receive a modulated digital baseband signal or digital intermediate frequency signal from the processor 8201, convert the modulated digital baseband signal or digital intermediate frequency signal into a radio frequency signal, and send the radio frequency signal through the one or more antennas 8205. Specifically, the transceiver 8203 may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transceiver 8203 may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal. The transceiver may be referred to as a transceiver circuit, a transceiver unit, a transceiver component, a sending circuit, a sending unit, a sending component, or the like.

It should be noted that the communication apparatus 820 may be an entire communication apparatus, may be a part or component that implements a function of the communication apparatus, or may be a communication chip. When the communication apparatus 820 is the communication chip, the transceiver 8203 may be an interface circuit of the chip, where the interface circuit is configured to read and output a baseband signal.

An embodiment of this application provides a relay management method. As shown in FIG. 9, the method includes the following steps.

901: A network device obtains an identifier of a first terminal device from the first terminal device or a second terminal device.

The first terminal device may be a remote device, and the second terminal device may be a relay device of the first terminal device and provides a relay service for the first terminal device. The first terminal device may access a network through the second terminal device, or the first terminal device establishes an indirect connection to a network through the second terminal device. For example, the first terminal device may send data to an access network device through the second terminal device, or the first terminal device may receive, through the second terminal device, data sent by an access network device. The network device may be an access and mobility management network element AMF or a session management network element SMF.

In a specific implementation, remote UE and relay UE first perform a relay discovery procedure. For example, when the first terminal device establishes a connection to the access network device, and communication quality of a Uu interface between the first terminal device and the access network device cannot meet a communication requirement, or the first terminal device is in a non-connected (connection management-idle, CM-IDLE) mode, or the first terminal device is out of network coverage, the first terminal device may initiate a relay connection to the second terminal device based on relay discovery information preconfigured on a network side or locally preconfigured relay discovery information, to complete relay discovery. The relay discovery information is used for establishment of the relay connection (where for example, a direct connection between the first terminal device and the second terminal device may be a PC5 connection), and includes authorization information for connecting to the network through a relay, policy information for discovering a relay node, spectrum information for relay communication, and the like. The first terminal device may obtain an identifier of the second terminal device in the relay discovery procedure. The remote UE obtains relay identification information from a message exchanged with the relay UE.

After the remote UE and the relay UE complete relay discovery, the remote UE initiates a relay service request, or the relay UE initiates a relay service request. Specifically, the remote UE or the relay UE may initiate the relay service request via a relay service request message. If the remote UE initiates the relay service request message, the relay service request message may carry an identifier of the relay UE. If the relay UE initiates the relay service request message, the relay service request message may carry an identifier of the remote UE.

For example, the first terminal device initiates a relay service request, and the first terminal device sends a first message to an AMF or an SMF of the first terminal device, where the first message indicates that the first terminal device requests to access the network through the second terminal device. The first message sent by the first terminal device includes the identifier of the first terminal device and the identifier of the second terminal device, or the first message sent by the first terminal device includes the identifier of the second terminal device. The AMF or the SMF of the first terminal device may be considered as the network device in step 901.

If the first message includes the identifier of the first terminal device, the AMF or the SMF of the first terminal device may obtain the identifier of the first terminal device from the first message. Alternatively, if the first message does not include the identifier of the first terminal device, the AMF or the SMF receives the first message from the first terminal device, and may obtain the identifier of the first terminal device.

Alternatively, the second terminal device initiates a relay service request, and the second terminal device sends a first message to an AMF or an SMF of the second terminal device, where the first message indicates that the first terminal device requests to access the network through the second terminal device. The first message sent by the second terminal device includes the identifier of the first terminal device and the identifier of the second terminal device, or the first message sent by the second terminal device includes the identifier of the first terminal device. The AMF or the SMF of the second terminal device may be considered as the network device in step 901.

The AMF or the SMF of the second terminal device receives the first message sent by the second terminal device, and may obtain the identifier of the first terminal device from the first message.

902: The network device obtains relay limitation information of the first terminal device from a UDM or a UDR based on the identifier of the first terminal device.

The relay limitation information is for limiting a quantity of relay devices connected to the remote UE, so that the network side can manage and control use of the relay device by the remote UE, to prevent same remote UE from occupying excessive relay resources and bandwidth resources. For example, the relay limitation information of the first terminal device indicates a quantity of relay devices that can be connected to the first terminal device and/or an aggregate maximum bit rate AMBR that can be used by the first terminal device for a relay.

It should be noted that relay limitation information of the remote UE may be configured at a UE granularity, and the relay limitation information is applicable to any service of the remote UE. The relay limitation information of the remote UE may be a UE-AMBR (an AMBR at a UE granularity) that can be used by the remote UE when the remote UE performs a relay service.

Alternatively, relay limitation information of the remote UE is configured at a service granularity, and different services correspond to different relay limitation information. For example, the relay limitation information includes first relay limitation information and second relay limitation information, the first relay limitation information includes a quantity of relay devices that can be connected to the first terminal device when the first terminal device performs a first service and/or an AMBR that can be used by the first terminal device for a relay when the first terminal device performs the first service, and the second relay limitation information includes a quantity of relay devices that can be connected to the first terminal device when the first terminal device performs a second service and/or an AMBR that can be used by the first terminal device for a relay when the first terminal device performs the second service.

In a specific implementation, a PCF, the UDM, or the UDR may store subscription information of UE. For example, subscription information of the remote UE may be stored, and the subscription information of the remote UE includes the relay limitation information of the remote UE. The relay limitation information of the remote UE may be a quantity of relay devices that can be connected to the remote UE, and may further include an AMBR that can be used by the remote UE for a relay. The AMBR that can be used by the remote UE for a relay may be applicable to various application scenarios of the remote UE, or the AMBR that can be used by the remote UE for a relay includes corresponding AMBRs that are used by the remote UE for a relay when the remote UE uses different services.

In a possible implementation, the UDM or the UDR may maintain a group of data, a data header (Key) may be the identifier of the remote UE, and data content is the relay limitation information of the remote UE. Optionally, the data content may further include an identifier (relay UE ID) of the relay UE connected to the remote UE, relay (layer 2 or layer 3 relay) capability information, relay service information (relay service code, RSC, which may also be referred to as a relay service code), and service-related information. The service-related information may be one or more of a service ID, an application ID, a data network name (data network name, DNN), and single network slice selection assistance information (single network slice selection assistance information, S-NSSAI).

Optionally, the PCF may store policy information of the UE. For example, policy information of the remote UE may be stored, and the policy information of the remote UE includes the relay limitation information of the remote UE. The relay limitation information of the remote UE may include the quantity of relay devices that can be connected to the remote UE, and may further include the AMBR that can be used by the remote UE for a relay.

In a possible implementation, the PCF may maintain a group of data, a data header (Key) may be the identifier of the remote UE, and data content is the relay limitation information of the remote UE. Optionally, the data content may further include an identifier (relay UE ID) of the relay connected to the remote UE, relay (layer 2 or layer 3 relay) capability information, relay service information (RSC), and service-related information. The service-related information may be one or more of a service ID, an application ID, a data network name (data network name, DNN), and single network slice selection assistance information (single network slice selection assistance information, S-NSSAI).

In another possible implementation, the PCF may maintain a group of data, a data header (Key) may be service-related information of the remote UE, and data content is the relay limitation information of the remote UE.

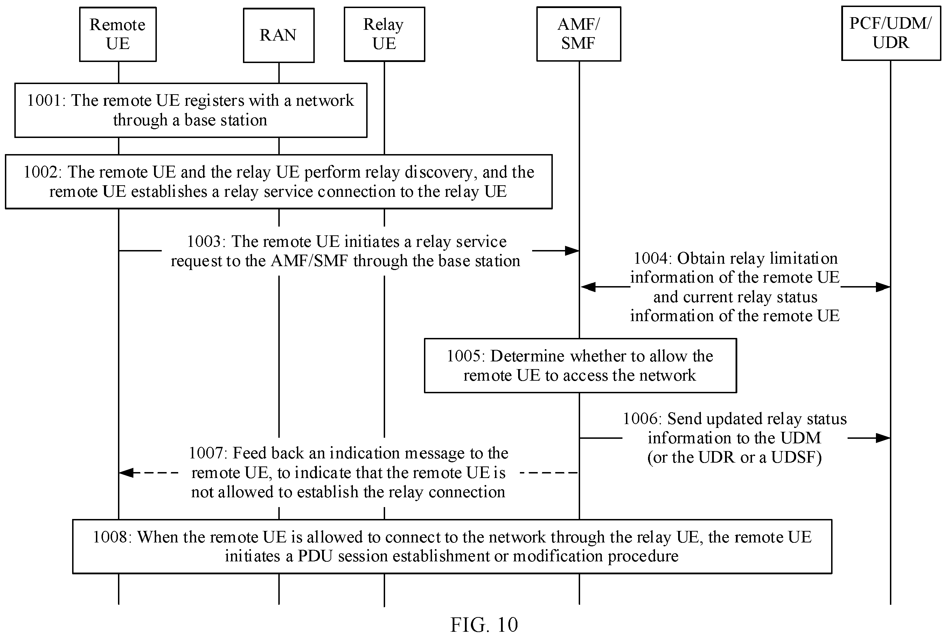

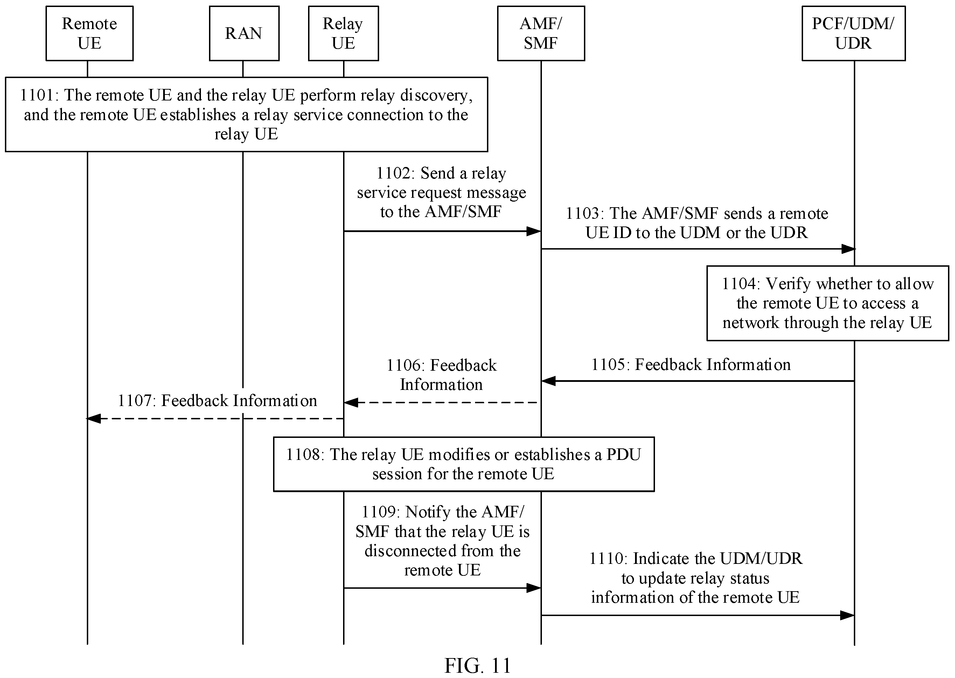

It should be noted that, on a premise that no conflict occurs, the following steps performed by the UDM or the UDR may alternatively be performed by the PCF, for example, step 1004 and step 1006 in FIG. 10, and step 1103 to step 1105 and step 1110 in FIG. 11.

After receiving the first message from the first terminal device or the second terminal device, the network device may send the identifier of the first terminal device to the UDM or the UDR, to request the relay limitation information of the first terminal device.

Specifically, in response to the first message, the network device sends a second message to a unified data management network element or a unified data repository network element, where the second message is for requesting the relay limitation information of the first terminal device, and the second message includes the identifier of the first terminal device.

The network device may further receive the relay limitation information of the first terminal device from the unified data management network element or the unified data repository network element.

It should be noted that if the relay limitation information is configured for the UE at the service granularity, different services correspond to different relay limitation information. When initiating the relay service request via the first message, the first terminal device or the second terminal device needs to indicate service information of the remote UE. For example, the first message includes the service-related information, and the service-related information is for describing a current service of the remote UE. For explanations of the service information, refer to the foregoing descriptions. Details are not described herein again.

Correspondingly, the network device may obtain, from the UDM or the UDR based on the service-related information, the relay limitation information corresponding to the service-related information. For example, the second message sent by the network device includes the service-related information.

In a possible implementation, the network device may use a data update service (for example, an Nudr_DM_Update service in TS 23.501) to obtain the relay limitation information of the first terminal device. The AMF is used as an example. The AMF sends a data update service message to the UDM or the UDR, where the message carries the remote UE ID. The UDM or the UDR receives the data update service message, determines the relay limitation information of the remote UE based on the UE ID in the message, and sends the relay limitation information of the remote UE to the AMF.

It should be noted that, in this embodiment of this application, the identifier of the terminal device and the identifier of the UE may each be a subscription permanent identifier (subscription permanent identifier, SUPI), a generic public subscription identifier (generic public Subscription identifier, GPSI), or an identifier allocated by a third-party service provider. The identifier allocated by the third-party service provider may be an application layer user identifier (Application Layer User ID).

903: The network device determines, based on the relay limitation information of the first terminal device, whether to allow the first terminal device to access the network through the second terminal device.

In a specific implementation, the network device needs to determine whether a current relay status of the first terminal device exceeds a limit of the relay limitation information of the first terminal device. If the current relay status of the first terminal device exceeds the limit of the relay limitation information of the first terminal device, the first terminal device is not allowed to connect to the relay device, in other words, the first terminal device is not allowed to access the network through the second terminal device, and the relay service request of the first terminal device is rejected. Whether a current relay service request of the first terminal device is allowed may be determined with reference to the quantity of relay devices that can be connected to the first terminal device, or whether a current relay service request of the first terminal device is allowed may be determined with reference to the AMBR that can be used by the first terminal device for a relay.

It should be noted that if either the quantity of relay devices that can be connected to the first terminal device or the AMBR that can be used by the first terminal device for a relay exceeds the limit, the current relay service request of the first terminal device is rejected. Once an AMBR currently used for a relay exceeds the AMBR that can be used by the first terminal device for a relay, regardless of whether a quantity of relay devices currently connected to the first terminal device exceeds the quantity of relay devices that can be connected to the first terminal device, the current relay service request of the first terminal device is rejected. Once a quantity of relay devices currently connected to the first terminal device exceeds the quantity of relay devices that can be connected to the first terminal device, regardless of whether an AMBR currently used for a relay exceeds the AMBR that can be used by the first terminal device for a relay, the current relay service request of the first terminal device is rejected.

In a possible implementation, if the quantity of relay devices currently connected to the first terminal device does not exceed the quantity of relay devices that can be connected to the first terminal device, the first terminal device is allowed to access the network through the second terminal device; or if the quantity of relay devices currently connected to the first terminal device is equal to the quantity of relay devices that can be connected to the first terminal device, the first terminal device is disallowed to access the network through the second terminal device.

For example, the quantity of relay devices that can be connected to the first terminal device is M, and the quantity of relay devices currently connected to the first terminal device is x. When x is less than M, the current relay service request of the first terminal device is allowed, and the first terminal device is allowed to access the network through the second terminal device. When x is equal to M, the current relay service request of the first terminal device is rejected, and the first terminal device is not allowed to access the network through the second terminal device.

In another possible implementation, if the AMBR currently used by the first terminal device for a relay does not exceed the AMBR that can be used by the first terminal device for a relay, the first terminal device is allowed to access the network through the second terminal device; or if the AMBR currently used by the first terminal device for a relay is equal to the AMBR that can be used by the first terminal device for a relay, the first terminal device is disallowed to access the network through the second terminal device.

For example, the AMBR that can be used by the first terminal device for a relay is 10 Mbps, and the AMBR currently used by the first terminal device for a relay is y Mbps. When y is less than 10, the current relay service request of the first terminal device is allowed, and the first terminal device is allowed to access the network through the second terminal device. When y is equal to 10, the current relay service request of the first terminal device is rejected, and the first terminal device is not allowed to access the network through the second terminal device.

In a possible implementation, the unified data management network element or the unified data repository network element further records the current relay status of the remote UE. The first terminal device is used as an example. The unified data management network element or the unified data repository network element records the quantity of relay devices currently connected to the first terminal device and/or the AMBR currently used by the first terminal device for a relay.

Optionally, the method shown in FIG. 9 further includes: The network device obtains, from the unified data management network element or the unified data repository network element, the quantity of relay devices currently connected to the first terminal device and/or the AMBR currently used by the first terminal device for a relay.

After obtaining, from the unified data management network element or the unified data repository network element, the quantity of relay devices currently connected to the first terminal device and/or the AMBR currently used by the first terminal device for a relay, the network device may determine, based on the current relay status of the first terminal device and the relay limitation information of the first terminal device, whether to allow the current relay service request of the first terminal device.

Optionally, the method shown in FIG. 9 further includes: When the current relay service request of the first terminal device is allowed based on the relay limitation information of the first terminal device, the network device may further establish a PDU session, so that the first terminal device accesses a core network. The PDU session may be a session of the first terminal device or a session of the second terminal device.

For example, if the network device allows the first terminal device to access the network through the second terminal device, the network device establishes the session of the first terminal device, or establishes the session of the second terminal device.

Specifically, in a layer 2 relay scenario, a session of the remote UE (for example, the first terminal device) is established, and relay UE (for example, the second terminal device) forwards the session of the remote UE, to provide a relay service for the remote UE. In a layer 3 relay scenario, a session of the relay UE is established, so that the relay UE provides a relay service for the remote UE.

It is assumed that the network device is the AMF. After the AMF determines, based on the relay limitation information of the first terminal device, to allow the first terminal device to access the network through the second terminal device, the AMF sends acknowledgement information to the first terminal device or the second terminal device, to indicate that the second terminal device may establish or modify a PDU session for the first terminal device, or indicate that the second terminal device may provide a relay service for the first terminal device.

Subsequently, the first terminal device or the second terminal device may subsequently send a PDU session establishment request message or a PDU session modification request message to the SMF.

It should be noted that the first terminal device or the second terminal device may send the first message and the PDU session modification/establishment request message to the AMF together. After the AMF allows, based on the relay limitation information of the first terminal device, the first terminal device to access the network through the second terminal device, the AMF may forward the PDU session modification/establishment request message to the SMF.

It is assumed that the network device is the SMF. After determining, based on the relay limitation information of the first terminal device, to allow the first terminal device to access the network through the second terminal device, the SMF establishes a PDU session for the remote UE, or allows the relay UE to provide a relay service for the remote UE.

Optionally, the method shown in FIG. 9 may further include: When the network device allows the current relay service request of the first terminal device, the network device establishes the session of the first terminal device or the session of the second terminal device for the relay service of the first terminal device. The network device may further record a current latest relay status of the first terminal device. For example, the network device updates the quantity of relay devices currently connected to the first terminal device and/or the AMBR currently used by the first terminal device for a relay.

For example, the quantity of relay devices that can be connected to the first terminal device is M, and the quantity of relay devices currently connected to the first terminal device is x. When x is less than M, the current relay service request of the first terminal device is allowed, and the first terminal device is allowed to access the network through the second terminal device. The network device may further update the quantity of relay devices currently connected to the first terminal device to (x+1).

Alternatively, the AMBR that can be used by the first terminal device for a relay is 10 Mbps, and the AMBR currently used by the first terminal device for a relay is y Mbps. When y is less than 10, the current relay service request of the first terminal device is allowed, and the first terminal device is allowed to access the network through the second terminal device. The PDU session of the first terminal device or the second terminal device is established for the relay service of the first terminal device, where a session-AMBR of the PDU session is r. The network device may further update the AMBR currently used by the first terminal device for a relay to (y+r) Mbps, where (y+r) Mbps is less than or equal to 10 Mbps.

In a specific implementation, the network device may further obtain an AMBR at a session granularity (a session-AMBR) from the UDMIUDR. In the layer 2 relay scenario, the first terminal device establishes or updates the PDU session, and the second terminal device forwards the PDU session, to provide a relay service for the first terminal device. The AMBR at the session granularity is a session-AMBR corresponding to the first terminal device. In the layer 3 relay scenario, the second terminal device establishes or updates the PDU session, to provide a relay service for the first terminal device. The AMBR at the session granularity is a session-AMBR corresponding to the second terminal device.

Optionally, the method shown in FIG. 9 further includes: After recording the current latest relay status of the first terminal device, the network device may further send, to the unified data management network element, an updated quantity of relay devices currently connected to the first terminal device and/or an updated AMBR currently used by the first terminal device for a relay. For example, the network device sends (y+r) and (x+1) to the unified data management network element or the unified data repository network element.

Optionally, the method shown in FIG. 9 further includes: The network device determines, based on the relay limitation information of the first terminal device, to allow the current relay service request of the first terminal device, and further indicate the unified data management network element or the unified data repository network element to update the relay status of the first terminal device.

For example, if the network device allows the first terminal device to access the network through the second terminal device, the network device sends a third message to the unified data management network element, so that the unified data management network element updates, based on the third message, the quantity of relay devices currently connected to the first terminal device and/or the AMBR currently used by the first terminal device for a relay, where the third message indicates that the network device allows the first terminal device to access the network through the second terminal device.

In a possible implementation, the third message includes the identifier of the second terminal device. After receiving the third message, in addition to the quantity of relay devices currently connected to the first terminal device and the AMBR currently used by the first terminal device for a relay, the unified data management network element or the unified data repository network element may further record an identifier of the relay device (namely, the second terminal device in this embodiment of this application) connected to the first terminal device.

Optionally, the method shown in FIG. 9 further includes: The network device determines, based on the relay limitation information of the first terminal device, to reject the current relay service request of the first terminal device, and may further feed back rejection information to a device initiating a relay service request.

For example, in a scenario in which the first terminal device sends the first message to request to access the network through the second terminal device, if the network device disallows the first terminal device to access the network through the second terminal device, the network device sends a fourth message to the first terminal device, where the fourth message indicates that the network device disallows the first terminal device to access the network through the second terminal device.

In a scenario in which the second terminal device sends the first message, to indicate that the first terminal device requests to access the network through the second terminal device, if the network device disallows the first terminal device to access the network through the second terminal device, the network device sends a fourth message to the second terminal device, where the fourth message indicates that the network device disallows the first terminal device to access the network through the second terminal device.

Optionally, the fourth message includes a failure cause value, where the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

In a possible implementation, the network device may further update the relay status of the first terminal device after the session is released.

For example, the quantity of relay devices that can be connected to the first terminal device is M, and the quantity of relay devices currently connected to the first terminal device is x. When x is less than M, the current relay service request of the first terminal device is allowed, the first terminal device is allowed to access the network through the second terminal device, and the PDU session of the first terminal device or the second terminal device is established for the relay service of the first terminal device. The network device may further update the quantity of relay devices currently connected to the first terminal device to (x+1). After the PDU session is released, the network device may further update the quantity of relay devices currently connected to the first terminal device to x, and notify the UDM or the UDR of a latest relay status, for example, notify the UDM or the UDR that the quantity of relay devices currently connected to the first terminal device is x. Alternatively, after the PDU session is released, the network device may indicate the UDM or the UDR to update the quantity of relay devices currently connected to the first terminal device.

Alternatively, the AMBR that can be used by the first terminal device for a relay is 10 Mbps, and the AMBR currently used by the first terminal device for a relay is y Mbps. When y is less than 10, the current relay service request of the first terminal device is allowed, and the first terminal device is allowed to access the network through the second terminal device. The PDU session of the first terminal device or the second terminal device is established for the relay service of the first terminal device, where a session-AMBR of the PDU session is r. The network device may further update the AMBR currently used by the first terminal device for a relay to (y+r) Mbps, where (y+r) Mbps is less than or equal to 10 Mbps. When the PDU session is released, the network device may further update the AMBR currently used by the first terminal device for a relay to y Mbps, and notify the UDM or the UDR that the AMBR currently used by the first terminal device for a relay is y Mbps. Alternatively, after the PDU session is released, the network device may indicate the UDM or the UDR to update the AMBR currently used by the first terminal device for a relay.

In the foregoing implementations, the network device determines whether to allow the current relay service request of the first terminal device. In another possible implementation, after receiving the first message from the first terminal device or the second terminal device, the network device sends a fifth message to a UDM or a UDR. The fifth message includes relay authentication request information and the identifier of the first terminal device, to request the UDM or the UDR to determine whether to allow the first terminal device to access the network through the second terminal device. The UDM or the UDR may determine whether a quantity of relay devices currently connected to the first terminal device reaches an upper limit. Specifically, the UDM or the UDR determines whether the quantity of relay devices currently connected to the first terminal device exceeds a quantity of relay devices that can be connected to the first terminal device and/or whether an AMBR currently used by the first terminal device for a relay exceeds an AMBR that can be used by the first terminal device for a relay.

The UDM or the UDR may further send a sixth message to the network device, to indicate whether the first terminal device is allowed to access the network through the second terminal device. The UDM or the UDR may further update the quantity of relay devices currently connected to the first terminal device, an identifier of the relay device currently connected to the first terminal device, and the AMBR currently used by the first terminal device for a relay.

Refer to FIG. 10. An embodiment of this application further provides a relay management method. For example, a first terminal device is remote UE, a second terminal device is relay UE, and a network device is an AMF/SMF. The method shown in FIG. 10 is applicable to a layer 2 relay scenario. When the remote UE expects to access a network in a relay manner, the remote UE initiates a relay service request, and the AMF/SMF may manage and control the relay service request, and allow or reject the relay service request initiated by the remote UE. As shown in FIG. 10, the method includes the following steps.

1001: The remote UE registers with the network through a base station.

When the remote UE is within coverage of a cellular network, before performing communication through the cellular network, the remote UE needs to register with a core network. When the remote UE connects to the network, the AMF/SMF may obtain subscription information of the remote UE from a UDM or a UDR. The subscription information of the remote UE includes capability information of the remote UE and relay limitation information of the remote UE. The capability information of the remote UE indicates that the remote UE has a capability of accessing the network in the relay manner, and the relay limitation information of the remote UE indicates a quantity of relay devices that can be connected to the remote UE and/or an AMBR that can be used by the remote UE for a relay.

1002: The remote UE and the relay UE perform relay discovery, and the remote UE establishes a relay service connection to the relay UE.

When the remote UE connects to the cellular network and finds that communication quality of a Uu interface between the remote UE and the base station cannot meet a communication requirement, the remote UE may request to connect to the network in the relay manner. The remote UE may initiate the relay service request, or the base station or the core network indicates the remote UE to connect to the network in the relay manner.

For a relay discovery procedure, refer to the foregoing descriptions. Details are not described herein again. The remote UE may obtain an identifier of the relay UE from a message exchanged with the relay UE. The relay service connection may be a PC5 connection.

1003: After the remote UE establishes the relay service connection to the relay UE, the remote UE initiates the relay service request to the AMF/SMF through the base station.

In a specific implementation, the AMF is used as an example. The remote UE may initiate the relay service request to the AMF via a non-access stratum (non-access stratum, NAS) message, to request to establish a connection to the network in the relay manner. The NAS message includes information about the relay device connected to the remote UE, and the information may be an identifier (relay UE ID) of the relay device.

Alternatively, the remote UE sends an RRC message to the base station through the relay UE, where the RRC message includes a NAS message. After receiving the RRC message, the base station forwards the NAS message in the RRC message to the AMF. The NAS message further includes a binding relationship between the remote UE and the relay UE. The AMF may determine, based on the binding relationship between the remote UE and the relay UE, specific relay UE through which the remote UE needs to connect to the network. The binding relationship between the remote UE and the relay UE may be a correspondence between an identifier of the remote UE and the identifier of the relay UE.

The SMF is used as an example. The remote UE sends a PDU session establishment request message or a PDU session modification request message to the SMF, to initiate the relay service request. The PDU session establishment request message or the PDU session modification request message includes information about the relay device connected to the remote UE, to request to establish a connection to the network through the relay device.

It should be noted that in step 1003, the remote UE sends, to the base station, a message for initiating a relay service. The message may include indication information, and the indication information indicates that "the remote UE connects to the network in the relay manner". After receiving the message, the base station initiates the relay service request to the AMF via an N2 message, where the N2 message carries the indication information. Alternatively, the base station initiates the relay service request to the SMF via an N2 SM message, where the N2 SM message carries the indication information.

In another possible implementation, in step 1003, when the remote UE sends, to the base station through the relay UE, a message, for example, the NAS message, a service request message, or the PDU session establishment or modification message, the base station may determine, based on the received message, that the remote UE connects to the base station through the relay UE. For example, the base station determines, based on a message format or information about a Uu interface protocol stack, that the remote UE connects to the base station through the relay UE. After receiving these messages, the base station may further send a relay service request message to the AMF via an N2 message, where the message notifies the AMF that "the remote UE connects to the network in the relay manner". For example, the N2 message carries indication information, and the indication information indicates that "the remote UE connects to the network in the relay manner". Alternatively, when the base station receives these messages and needs to forward these messages to the AMF, the indication information may be carried in these messages.

Alternatively, after the base station receives these messages and determines that the remote UE connects to the base station through the relay UE, the base station sends a relay service request message to the SMF via an N2 SM message, where the message notifies the SMF that the remote UE connects to the network in the relay manner. For example, the N2 SM message carries indication information, and the indication information indicates that "the remote UE connects to the network in the relay manner". Alternatively, when the base station receives these messages and needs to forward these messages to the SMF, the indication information may be carried in these messages.

In this way, the AMF/SMF can learn that "the remote UE connects to the network in the relay manner", so that the AMF/SMF can manage and control a current relay service of the remote UE based on the relay limitation information of the remote UE, to prevent the remote UE from connecting to excessive relay devices and occupying excessive relay resources.

1004: The AMF/SMF obtains the relay limitation information of the remote UE and current relay status information of the remote UE.

The current relay status information of the remote UE may be a quantity of relay devices currently connected to the remote UE or an AMBR currently used by the remote UE for a relay.

In a specific implementation, the AMF/SMF may locally store the subscription information of the remote UE. If the AMF/SMF does not have the subscription information of the remote UE locally, the AMF/SMF may obtain the subscription information of the remote UE from the UDM or the UDR.

The subscription information of the remote UE includes authorization information indicating whether the remote UE can access the network through a relay, and the relay limitation information of the remote UE. In addition, the AMF/SMF may obtain the current relay status information of the remote UE from the UDM, the UDR, or an unstructured data storage function (unstructured data storage function, UDSF) network element. The current relay status information of the remote UE may be stored in a UE context. If the remote UE has no UE context in the core network, the AMF/SMF may create the UE context for the remote UE.

1005: The AMF/SMF determines whether to allow the remote UE to access the network.

Specifically, a quantity of relay devices connected to the remote UE is compared with the quantity of relay devices that can be connected to the remote UE, where if the quantity of relay devices connected to the remote UE does not exceed the quantity of relay devices that can be connected to the remote UE, the remote UE is allowed to access the network through the relay UE; or if the quantity of relay devices connected to the remote UE is equal to the quantity of relay devices that can be connected to the remote UE, the remote UE is not allowed to access the network through the relay UE, and the relay request of the remote UE is rejected; and/or
an AMBR used by the remote UE for a relay is compared with the AMBR that can be used by the remote UE for a relay, where if the AMBR used by the remote UE for a relay does not exceed the AMBR that can be used by the remote UE for a relay, the remote UE is allowed to access the network through the relay UE; or if the AMBR used by the remote UE for a relay is equal to the AMBR that can be used by the remote UE for a relay, the remote UE is not allowed to access the network through the relay UE, and the relay request of the remote UE is rejected.

If the remote UE is allowed to connect to the network through the relay, step 1006 is performed. The AMF/SMF may further update the current relay status information of the remote UE, that is, increase a quantity of relays newly connected to the remote UE. Optionally, an identifier of relay UE that is newly connected and bound to the remote UE may be added.

If the remote UE is not allowed to connect to the network through the relay, step 1007 is performed.

1006: The AMF/SMF sends updated relay status information to the UDM (or the UDR or the UDSF).

The UDM (or the UDR or the UDSF) stores latest updated relay status information, to subsequently query a latest relay status of the remote UE from the UDM (or the UDR or the UDSF), so as to determine whether a relay upper limit of the remote UE is exceeded.

1007: An indication message is fed back to the remote UE, to indicate that the remote UE is not allowed to establish the relay connection.

The indication message may further indicate that a cause of rejection of establishment of the relay connection is that an upper limit of the relay connection of the remote UE is exceeded, that is, the quantity of relay devices currently connected to the remote UE reaches the upper limit.

1008: When the remote UE is allowed to connect to the network through the relay UE, the remote UE initiates a PDU session establishment or modification procedure.

In a possible implementation, after the remote UE disconnects from the relay, the AMF/SMF updates the UE context or performs the operation in step 5, to indicate the UDM, the UDR, or the UDSF to update record information of use of the relay by the remote UE, or send updated information to the UDM, the UDR, or the UDSF.

It should be noted that step 1008 is performed after step 1006 is performed. To be specific, when a current relay service request of the remote UE is allowed, the remote UE establishes or modifies a session, and the relay UE may forward the session, to provide a relay service for the remote UE. If step 1007 is performed, step 1008 does not need to be performed.

In the method shown in FIG. 10, a network side (AMF/SMF) may limit, based on the relay limitation information in the subscription information of the UE, the quantity of relays connected when the UE accesses the network in the relay manner, to prevent same remote UE from occupying excessive relay resources and bandwidth resources.

Refer to FIG. 11. An embodiment of this application further provides a relay management method. For example, a first terminal device is remote UE, a second terminal device is relay UE, and a network device is an AMF/SMF. The method shown in FIG. 11 is applicable to a layer 2 relay scenario or a layer 3 relay scenario. When the remote UE expects to access a network in a relay manner, the relay UE initiates a relay service request, and the AMF/SMF may manage and control the relay service request, and allow or reject the relay service request initiated by the relay UE. As shown in FIG. 11, the method includes the following steps.

1101: The remote UE and the relay UE perform relay discovery, and the remote UE establishes a relay service connection to the relay UE.

When the remote UE connects to a cellular network and finds that communication quality of a Uu interface between the remote UE and a base station cannot meet a communication requirement, the remote UE may request to connect to the network in the relay manner. The remote UE may initiate a relay service request, or the base station or a core network indicates the remote UE to connect to the network in the relay manner.

When the remote UE accesses the network through a layer 3 relay, there is no signaling exchange between the remote UE and the base station and between the remote UE and the core network. The relay UE may initiate the relay service request, and the core network may verify whether to allow the remote UE to access the network through the relay UE. When the remote UE needs to access the network through a layer 2 relay, the remote UE may initiate the relay service request to a core network element, and the core network may verify whether to allow the remote UE to access the network through the relay UE. The relay UE obtains an identifier of the remote UE during exchange with the remote UE.

For a relay discovery procedure, refer to the foregoing descriptions. Details are not described herein again. The remote UE may obtain an identifier of the relay UE from a message exchanged with the relay UE. The relay service connection may be a PC5 connection.

1102: The relay UE sends a relay service request message to the AMF/SMF via a NAS message.

The relay service request message is the first message in embodiments of this application, and may include the identifier (remote UE ID) of the remote UE that needs to access the network in the relay manner. Optionally, a relay service indication may be carried in the NAS message. The relay service indication notifies a network side (AMF/SMF) that the relay UE needs to provide a relay service for the remote UE.

In a possible implementation, when the relay UE establishes or modifies a PDU session for the remote UE, the relay service request message may be sent to the AMF/SMF together with a PDU session establishment or modification request message.

Specifically, the relay UE sends the PDU session establishment or modification request message as an N1 session management container (N1 SM container) to the AMF/SMF via the NAS message. The N1 SM container may include a PDU session establishment or modification request, a PDU session ID, and the like. The NAS message may further include the remote UE ID.

1103: The AMF/SMF sends the remote UE ID to a UDM or a UDR.

Optionally, the AMF/SMF may further send the relay UE ID, capability information of the relay UE, and relay service information to the UDM (or the UDR).

In a possible implementation, the UDM or the UDR may maintain a group of data, a data header (Key) may be the identifier of the remote UE, and data content is relay limitation information of the remote UE. Optionally, the data content may further include an identifier (Relay ID) of the relay connected to the remote UE, relay (layer 2 or layer 3 relay) capability information, relay service information (RSC), and service-related information (a service ID, an application ID, a data network name (data network name, DNN), and/or single network slice selection assistance information (single network slice selection assistance information, S-NSSAI)).

1104: The UDM (or the UDR) verifies whether to allow the remote UE to access the network through the relay UE.

Specifically, the UDM (or the UDR) verifies whether a quantity of relay devices connected to the remote UE exceeds a limit of the relay limitation information of the remote UE.

The UDM (or the UDR) queries subscription data of the remote UE based on the remote UE ID. Whether a quantity of relay devices currently connected to the remote UE exceeds an upper limit is determined based on the relay limitation information. For example, whether the quantity of relay devices currently connected to the remote UE exceeds a quantity of relay devices that can be connected to the remote UE or whether an AMBR currently used by the remote UE for a relay exceeds an AMBR that can be used by the remote UE for a relay is determined.

If the upper limit is not exceeded, the UDM (or the UDR) sends feedback information to the AMF/SMF, to indicate that establishment of the relay connection is allowed. The UDM (or the UDR) may further update relay status information of the remote UE, for example, update the quantity of relay devices currently connected to the remote UE or the AMBR currently used by the remote UE for a relay.

If the upper limit is exceeded, the UDM (or the UDR) sends feedback information to the AMF/SMF, to indicate that establishment of the relay connection is rejected.

In another possible implementation, the AMF/SMF verifies whether to allow the remote UE to access the network through the relay UE. When the AMF/SMF obtains the relay service request message, the AMF/SMF may use a data update service (for example, an Nudr_DM_Update service in TS 23.501) to obtain relay status information of the remote UE and relay limitation information of the remote UE from the UDM (or the UDR). The AMF/SMF verifies, based on the relay status information of the remote UE and the relay limitation information of the remote UE, whether to allow the remote UE to access the network through the relay UE.

1105: The UDM (or the UDR) sends the feedback information to the AMF/SMF.

The feedback information may indicate that the remote UE is allowed to establish the relay connection, or the remote UE is disallowed to establish the relay connection.

Optionally, when the feedback information indicates that the remote UE is disallowed to establish the relay connection, the feedback information may further include a rejection cause value, where the rejection cause value may indicate that a rejection cause is that the quantity of relay devices connected to the remote UE exceeds the limit.

1106: Optionally, the AMF/SMF sends the feedback information to the relay UE.

If in step 1102, the relay UE independently sends the relay service request message instead of initiating the relay service request via the PDU session establishment or modification request message, the AMF/SMF sends the feedback information to the relay UE based on the feedback information obtained from the UDM or the UDR, to indicate whether the remote UE is allowed to access the network through the relay UE.

1107: Optionally, the relay UE forwards the feedback information from the AMF/SMF to the remote UE.

It should be noted that, in step 1102, the relay UE includes the PDU session establishment or modification message in the NAS message. When the feedback information received by the AMF/SMF indicates that the remote UE is allowed to access the network through the relay UE, the AMF/SMF directly forwards the PDU session establishment or modification message of the relay UE to the SMF. Step 1006 and step 1007 are skipped, and step 1008 is performed.

When the feedback information received by the AMF/SMF indicates that the remote UE is disallowed (not allowed) to access the network through the relay UE, the AMF/SMF performs step 1006, and the relay UE performs step 1007, to indicate that the remote UE is not allowed to access the network through the relay UE.

1108: The relay UE modifies or establishes the PDU session for the remote UE.

It should be noted that when the method shown in FIG. 11 is applicable to the layer 2 relay scenario, the remote UE modifies or establishes the PDU session.

1109: After the remote UE disconnects from the relay UE, the relay UE notifies the AMF/SMF that the relay UE is disconnected from the remote UE.

In a specific implementation, in the layer 3 relay scenario, the relay UE notifies the AMF or the SMF that "the relay UE is disconnected from the remote UE".

In the layer 2 relay scenario, the relay UE may notify the base station that "the relay UE is disconnected from the remote UE", and then the base station notifies the AMF or the SMF that "the relay UE is disconnected from the remote UE". Alternatively, after obtaining no information about the remote UE within a specific time of period, the base station directly sends a message to the AMF or the SMF, to notify the AMF or the SMF that "the relay UE is disconnected from the remote UE".

1110: The AMF/SMF indicates the UDM/UDR to update the relay status information of the remote UE.

Specifically, the UDM/UDR may subtract one from the quantity of relay devices connected to the remote UE, or subtract p from the AMBR used by the remote UE for a relay, where p may be an AMBR at a session granularity (a session-AMBR) that is used when the remote UE accesses the network in the relay manner. In the layer 2 scenario, the remote UE establishes or updates the PDU session, and the relay UE forwards the PDU session to provide a relay service for the remote UE. The AMBR at the session granularity may be a session-AMBR of the PDU session. In the layer 3 scenario, the relay UE establishes or updates the PDU session, to provide a relay service for the remote UE, and the AMBR at the session granularity may be a session-AMBR of the PDU session.

In the method shown in FIG. 11, the network side (AMF/SMF) may limit, based on the relay limitation information in the subscription information of the UE, the quantity of relays connected when the UE accesses the network in the relay manner, to prevent same remote UE from occupying excessive relay resources and bandwidth resources.

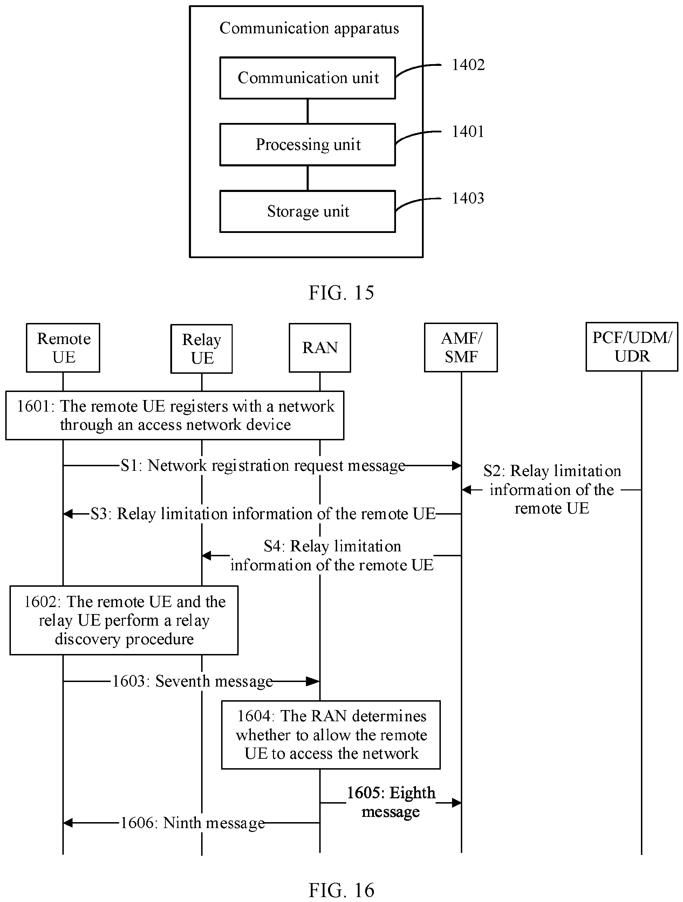

Refer to FIG. 16. An embodiment of this application further provides a relay management method. For example, a first terminal device is remote UE, a second terminal device is relay UE, and a network device is an AMF/SMF. The method shown in FIG. 16 is applicable to a layer 2 relay scenario. An access network device is connected to the first terminal device and/or the second terminal device. When the remote UE expects to access a network in a relay manner, the remote UE initiates a relay service request, and the access network device may manage and control the relay service request, and allow or reject the relay service request initiated by the remote UE. As shown in FIG. 16, the access network device is shown as a RAN in the figure, and the method includes the following steps.

1601: The remote UE registers with the network through the access network device.

In a specific implementation, the following steps S1 to S4 may be included.

S 1: The remote UE sends a network registration request message to the AMF through the access network device, where the network registration request message includes an identifier of the remote UE.

S2: A network device (for example, the AMF or the SMF) obtains relay limitation information of the remote UE from a PCF/UDM/UDR. The relay limitation information of the remote UE indicates a quantity of relay devices that can be connected to the remote UE, and/or an AMBR that can be used by the remote UE for a relay.

The AMF is used as an example for description. The AMF obtains the relay limitation information of the remote UE from the PCF/LTDM/LTDR based on the identifier that is of the remote UE and that is in the network registration request message. An obtaining manner is the same as that in step S1001, and details are not described again.

S3: Optionally, the network device sends the relay limitation information of the remote UE to the remote UE.

Optionally, when the remote UE registers with the network, the AMF sends, to the remote UE, policy-related information for a relay connection of the remote UE, where the policy-related information includes the relay limitation information of the remote UE.

Optionally, the policy-related information further includes indication information (for example, a relay service code (RSC)) indicating the relay connection of the remote UE. The relay service code may be generated by the PCF or stored in the UDM or the UDR together with subscription information of the remote UE.

Optionally, there is a correspondence between the relay service code of the remote UE and the relay limitation information of the remote UE. For example, when the relay limitation information indicates the quantity of relay devices that can be connected to the remote UE, the correspondence between the RSC and the relay limitation information is shown in the following table 1:

**Table 1**

| RSC | Quantity of relay devices that can be connected |
|---|---|
| RSC 1 | 1 |
| RSC 2 | 3 |
| RSC 3 | 5 |

In table 1, the RSC 1 corresponds to one relay device that can be connected, the RSC 2 corresponds to three relay devices that can be connected, and the RSC 3 corresponds to five relay devices that can be connected.

Optionally, the AMF sends the correspondence between the RSC of the remote UE and the relay limitation information of the remote UE to the remote UE.

S4: The network device (for example, the AMF or the SMF) sends the relay limitation information of the remote UE to the access network device.

It should be noted that, generally, the relay limitation information sent by the AMF to the remote UE in step S3 is forwarded by the access network device, and the access network device does not parse the information. Therefore, the relay limitation information of the remote UE cannot be obtained. The remote UE may be UE that is not trusted by the network device. Although the remote UE receives the relay limitation information sent by the AMF, the remote UE may not necessarily initiate the relay service request based on a requirement of the relay limitation information. Therefore, the AMF independently sends the relay limitation information of the remote UE to the access network device, so that the access network device determines the relay service request of the remote UE.

In the foregoing steps S 1 to S4, the remote UE registers with the network through the access network device, and the access network device receives the relay limitation information of the remote UE from the network device.

1602: The remote UE and the relay UE perform a relay discovery procedure.

For the relay discovery procedure, refer to the foregoing descriptions. Details are not described herein again.

Optionally, the remote UE filters discovered relay UEs based on the relay limitation information and/or the correspondence between the relay service code and the relay limitation information in S3 in step 1601.

In an example, if the remote UE discovers four relay UEs, and the relay limitation information limits the quantity of relay devices that can be connected to the remote UE to two, the remote UE may select two relay UEs based on distances or network quality between the remote UE and the four relay UEs, to perform relay services.

In another example, with reference to the foregoing table 1, if the remote UE is the RSC 1, and the quantity of relay UEs is determined as 3 based on the RSC 1, because the quantity of relay devices that can be connected to the RSC 2 is 1, the remote UE may select one relay UE based on distances or network quality between the remote UE and the three relay UEs, to perform a relay service.

1603: The remote UE initiates the relay service request to the access network device.

Specifically, the remote UE sends a seventh message to the access network device, where the seventh message indicates that the remote UE requests to access the network through the relay UE, and the seventh message includes an identifier of the relay UE.

1604: The access network device determines whether to allow the remote UE to access the network.

Specifically, the access network device compares a quantity of relay devices connected to the remote UE with the quantity of relay devices that can be connected to the remote UE, where if the quantity of relay devices connected to the remote UE does not exceed the quantity of relay devices that can be connected to the remote UE, the remote UE is allowed to access the network through the relay UE; or if the quantity of relay devices connected to the remote UE is equal to the quantity of relay devices that can be connected to the remote UE, the remote UE is not allowed to access the network through the relay UE, and the relay request of the remote UE is rejected; and/or
the access network device compares an AMBR used by the remote UE for a relay with the AMBR that can be used by the remote UE for a relay, where if the AMBR used by the remote UE for a relay does not exceed the AMBR that can be used by the remote UE for a relay, the remote UE is allowed to access the network through the relay UE; or if the AMBR used by the remote UE for a relay is equal to the AMBR that can be used by the remote UE for a relay, the remote UE is not allowed to access the network through the relay UE, and the relay request of the remote UE is rejected.

If the remote UE is allowed to connect to the network through a relay, step 1605 is performed. The access network device may further update current relay status information of the remote UE, that is, increase a quantity of relays newly connected to the remote UE. Optionally, an identifier of relay UE that is newly connected and bound to the remote UE may be added.

If the remote UE is not allowed to connect to the network through a relay, step 1606 is performed.

1605: The access network device sends an eighth message to the network device (the AMF or the SMF), where the eighth message is for requesting to modify or establish a PDU session of the remote UE.

Optionally, the seventh message in step 1603 includes information that has a same function as the eighth message, and the information is for requesting to modify or establish the PDU session of the remote UE. When receiving the seventh message, and when determining, based on the seventh message, to allow the remote UE to access the network through the relay UE, the access network device sends, to the network device, the information that has the same function as the eighth message and that is included in the seventh message. For example, the seventh message is an RRC request message, and the RRC request message includes the information for requesting to modify or establish the PDU session of the remote UE. When determining to allow the remote UE to access the network through the relay UE, the access network device sends, to the network device, the eighth message for requesting to modify or establish the PDU session of the remote UE.

Optionally, before sending the eighth message, the access network device sends, to the remote UE, a determining message indicating that the remote UE is allowed to access the network through the relay UE. Subsequently, the remote UE sends the eighth message to the access network device based on the determining message, and the access network device forwards the eighth message to the network device. For example, the eighth message is a PDU session establishment or modification request message.

1606: The access network device sends a ninth message to the remote UE, where the ninth message indicates that the access network device disallows the remote UE to access the network through the relay UE.

The ninth message may include a failure cause value indicating that establishment of the relay connection is rejected. A failure cause is that an upper limit of the relay connection of the remote UE is exceeded, that is, a quantity of relay devices currently connected to the remote UE reaches the upper limit, or an AMBR currently used for a relay is exceeded, that is, the AMBR currently used by the remote UE for a relay reaches the upper limit.

Optionally, the method shown in FIG. 16 further includes: The relay service request of the remote UE is for requesting to release the relay connection to the relay UE. If the remote UE is allowed to release the relay connection, the access network device may release the relay connection, and the access network device may further update the current relay status information of the remote UE, that is, subtract the quantity of relays connected to the remote UE. Optionally, the identifier of the relay UE that is connected and bound to the remote UE may be subtracted.

In the method shown in FIG. 16, the access network device may limit, based on the relay limitation information of the UE, the quantity of relays connected when the UE accesses the network in the relay manner, to prevent same remote UE from occupying excessive relay resources and bandwidth resources.

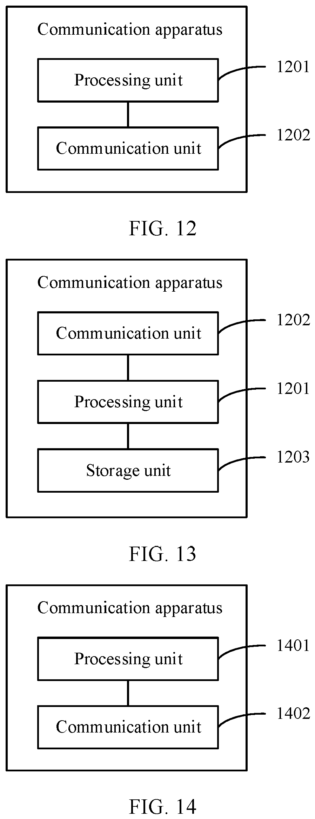

When each functional module is obtained through division based on each corresponding function, FIG. 12 is a possible schematic diagram of a structure of the communication apparatus in the foregoing embodiments. The communication apparatus shown in FIG. 12 may be the network device in embodiments of this application, may be a component that implements the foregoing methods in the network device, or may be a chip used in the network device. The network device may be the network device in the method shown in FIG. 9, or the AMF/SMF in the method shown in FIG. 10 or FIG. 11. The chip may be a system-on-a-chip (System-On-a-Chip, SoC), a baseband chip that has a communication function, or the like. As shown in FIG. 12, the communication apparatus includes a processing unit 1201 and a communication unit 1202. The processing unit may be one or more processors, and the communication unit may be a transceiver or a communication interface.

For example, the processing unit 1201 may be configured to support the network device in performing step 903 or step 1005, and/or another process of the technology described in this specification.

The communication unit 1202 is configured to support communication between the network device and another communication apparatus, for example, support the network device in performing one or more of step 901, step 901, step 1003, step 1004, step 1006, and step 1007, and/or another process of the technology described in this specification.

It should be noted that all related content of the steps in the foregoing method embodiments may be cited in function description of corresponding functional modules. Details are not described herein again.

As shown in FIG. 13, a communication apparatus may further include a storage unit 1203, and the storage unit 1203 is configured to store program code and/or data of the communication apparatus.

A processing unit 1201 may include at least one processor. A communication unit 1202 may be a transceiver or a communication interface. The storage unit 1203 may include a memory.

When each functional module is obtained through division based on each corresponding function, FIG. 14 is a possible schematic diagram of a structure of the communication apparatus in the foregoing embodiments. The communication apparatus shown in FIG. 14 may be the terminal device in embodiments of this application, may be a component that implements the foregoing methods in the terminal device, or may be a chip used in the terminal device. The chip may be a system-on-a-chip (System-On-a-Chip, SoC), a baseband chip that has a communication function, or the like. As shown in FIG. 14, the communication apparatus includes a processing unit 1401 and a communication unit 1402. The processing unit 1401 may be one or more processors, and the communication unit 1402 may be a transceiver or a communication interface.

The processing unit 1401 is configured to support the terminal device in performing internal processing, generating a message, and the like, and/or is configured to perform another process of the technology described in this specification.

The communication unit 1402 is configured to support communication between the terminal device and another communication apparatus, for example, support the terminal device in performing step 901, step 1003, step 1007, step 1103, and step 1107, and/or another process of the technology described in this specification.

It should be noted that all related content of the steps in the foregoing method embodiments may be cited in function description of corresponding functional modules. Details are not described herein again.

As shown in FIG. 15, a communication apparatus may further include a storage unit 1403, and the storage unit 1403 is configured to store program code and data of the communication apparatus.

A processing unit 1401 may include at least one processor. A communication unit 1402 may be a transceiver or a communication interface. The storage unit 1403 may include at least one memory.

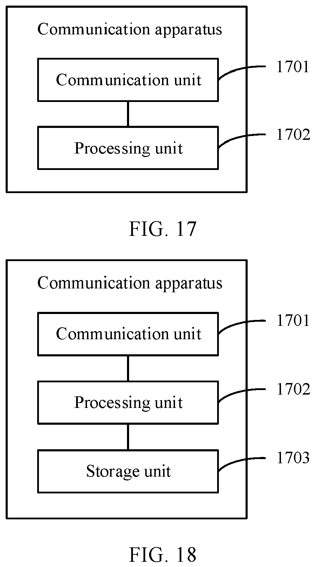

When each functional module is obtained through division based on each corresponding function, FIG. 17 is a possible schematic diagram of a structure of the communication apparatus in the foregoing embodiments. The communication apparatus shown in FIG. 17 may be the access network device in embodiments of this application, may be a component that implements the foregoing methods in the access network device, or may be a chip used in the access network device. The chip may be a system-on-a-chip (System-On-a-Chip, SoC), a baseband chip that has a communication function, or the like. As shown in FIG. 17, the communication apparatus includes a communication unit 1701 and a processing unit 1702. The communication unit 1701 may be a transceiver or a communication interface, and the processing unit 1702 may be one or more processors.

For example, the communication unit 1701 may be configured to support the access network device in performing one or more of step 1001, step 1002, step 1008, step 1601, step 1602, step 1603, step 1605, or step 1606, and/or another process of the technology described in this specification.

The processing unit 1702 is configured to support communication between the network device and another communication apparatus, for example, support the network device in performing step 1602 or step 1604, and/or another process of the technology described in this specification.

It should be noted that all related content of the steps in the foregoing method embodiments may be cited in function description of corresponding functional modules. Details are not described herein again.

As shown in FIG. 18, a communication apparatus may further include a storage unit 1703, and the storage unit 1703 is configured to store program code and/or data of the communication apparatus.

A communication unit 1701 may be a transceiver or a communication interface. A processing unit 1702 may include at least one processor. The storage unit 1703 may include a memory.

It should be noted that, in the foregoing communication apparatus embodiments, each unit may also be correspondingly referred to as a module, a component, a circuit, or the like.

An embodiment of this application provides a computer-readable storage medium. The computer-readable storage medium stores instructions. The instructions are for performing the method shown in FIG. 9, FIG. 10, FIG. 11, or FIG. 16.

An embodiment of this application provides a computer program product including instructions. When the computer program product runs on a communication apparatus, the communication apparatus is enabled to perform the method shown in FIG. 9, FIG. 10, FIG. 11, or FIG. 16.

An embodiment of this application provides a wireless communication apparatus. The wireless communication apparatus stores instructions. When the wireless communication apparatus runs on the communication apparatus shown in FIG. 8a, FIG. 8b, FIG. 12 to FIG. 15, FIG. 17, or FIG. 18, the communication apparatus is enabled to perform the method shown in FIG. 9, FIG. 10, FIG. 11, or FIG. 16. The wireless communication apparatus may be a chip.

An embodiment of this application further provides a communication system. The communication system includes a terminal device, an access network device, and a network device. For example, the terminal device may be the communication apparatus shown in FIG. 8a, FIG. 14, or FIG. 15, the network device may be the communication apparatus shown in FIG. 8b, FIG. 12, or FIG. 13, and the access network device may be the communication apparatus shown in FIG. 8b, FIG. 17, or FIG. 18.

The foregoing descriptions about implementations allow a person skilled in the art to understand that, for the purpose of convenient and brief description, division of the foregoing functional modules is used as an example for illustration. During actual application, the foregoing functions may be allocated to different functional modules and implemented based on requirements, that is, an inner structure of a communication apparatus is divided into different functional modules to implement all or some of the functions described above.

The processor in embodiments of this application may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to execute software instructions to perform an operation or processing. The processor may be an independent semiconductor chip, or may be integrated with another circuit into a semiconductor chip. For example, the processor may form a system-on-a-chip (SoC) with another circuit (for example, a codec circuit, a hardware acceleration circuit, or various buses and interface circuits). Alternatively, the processor may be integrated into an ASIC as a built-in processor of the ASIC, and the ASIC integrated with the processor may be separately packaged, or may be packaged with another circuit. In addition to the core configured to execute software instructions to perform an operation or processing, the processor may further include a necessary hardware accelerator, for example, a field programmable gate array (field programmable gate array, FPGA), a programmable logic device (PLD), or a logic circuit that implements a dedicated logic operation.

The memory in embodiments of this application may include at least one of the following types: a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto.

In this application, "at least one" refers to one or more. "A plurality of" refers to two or more than two. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same objects or similar objects whose functions and purposes are basically the same. A person skilled in the art may understand that the terms such as "first" and "second" do not limit a quantity or an execution sequence, and the terms such as "first" and "second" do not indicate a definite difference.

In the several embodiments provided in this application, it should be understood that the disclosed relay management method and communication apparatus and method may be implemented in other manners. For example, the described communication apparatus embodiment is merely an example. For example, division into the modules or the units is merely logical function division and there may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the communication apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in the form of a software product. The software product is stored in a storage medium and includes several instructions for instructing a device (which may be a single-chip microcomputer, a chip, or the like) or a processor to perform all or some of the steps of the methods described in embodiments of this application. The foregoing storage medium includes any medium capable of storing program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A relay management method, comprising:
obtaining, by a network device, an identifier of a first terminal device, and obtaining relay limitation information of the first terminal device based on the identifier of the first terminal device, wherein the relay limitation information indicates a quantity of relay devices that can be connected to the first terminal device and/or an aggregate maximum bit rate AMBR that can be used by the first terminal device for a relay; and
determining, by the network device based on the relay limitation information of the first terminal device, whether to allow the first terminal device to access a network through a second terminal device, wherein the second terminal device is a relay device of the first terminal device.

2. The method according to claim 1, wherein the obtaining, by a network device, an identifier of a first terminal device comprises:
receiving, by the network device, a first message from the first terminal device, wherein the first message comprises the identifier of the first terminal device and an identifier of the second terminal device, or the first message comprises an identifier of the second terminal device; and the first message indicates that the first terminal device requests to access the network through the second terminal device.

3. The method according to claim 1, wherein the obtaining, by a network device, an identifier of a first terminal device comprises:
receiving, by the network device, a first message from the second terminal device, wherein the first message comprises the identifier of the first terminal device and an identifier of the second terminal device, or the first message comprises the identifier of the first terminal device; and the first message indicates that the first terminal device requests to access the network through the second terminal device.

4. The method according to claim 2 or 3, wherein the obtaining, by the network device, relay limitation information of the first terminal device based on the identifier of the first terminal device comprises:
in response to the first message, sending a second message to a unified data management network element, a unified data repository network element, or a policy control network element, wherein the second message is for requesting the relay limitation information of the first terminal device, and the second message comprises the identifier of the first terminal device; and
receiving the relay limitation information of the first terminal device from the unified data management network element, the unified data repository network element, or the policy control network element.

5. The method according to any one of claims 1 to 4, wherein after the obtaining, by the network device, relay limitation information of the first terminal device based on the identifier of the first terminal device, the method further comprises:
sending, by the network device, the relay limitation information to the first terminal device.

6. The method according to any one of claims 1 to 4, wherein after the obtaining, by the network device, relay limitation information of the first terminal device based on the identifier of the first terminal device, the method further comprises:
sending, by the network device, the relay limitation information to an access network device, wherein the access network device is connected to the first terminal device and/or the second terminal device.

7. The method according to any one of claims 1 to 6, wherein the determining, by the network device based on the relay limitation information of the first terminal device, whether to allow the first terminal device to access a network through a second terminal device comprises:
if a quantity of relay devices currently connected to the first terminal device does not exceed the quantity of relay devices that can be connected to the first terminal device, allowing the first terminal device to access the network through the second terminal device; or if a quantity of relay devices currently connected to the first terminal device is equal to the quantity of relay devices that can be connected to the first terminal device, disallowing the first terminal device to access the network through the second terminal device; and/or
if an AMBR currently used by the first terminal device for a relay does not exceed the AMBR that can be used by the first terminal device for a relay, allowing the first terminal device to access the network through the second terminal device; or if an AMBR currently used by the first terminal device for a relay is equal to the AMBR that can be used by the first terminal device for a relay, disallowing the first terminal device to access the network through the second terminal device.

8. The method according to claim 7, wherein the method further comprises:
obtaining, by the network device from the unified data management network element, the unified data repository network element, or the policy control network element, the quantity of relay devices currently connected to the first terminal device and/or the AMBR currently used by the first terminal device for a relay.

9. The method according to claim 7 or 8, wherein the method further comprises:
if the network device allows the first terminal device to access the network through the second terminal device, updating, by the network device, the quantity of relay devices currently connected to the first terminal device and/or the AMBR currently used by the first terminal device for a relay; and
sending, to the unified data management network element, the unified data repository network element, or the policy control network element, an updated quantity of relay devices currently connected to the first terminal device and/or an updated AMBR currently used by the first terminal device for a relay.

10. The method according to claim 7 or 8, wherein the method further comprises:
if the network device allows the first terminal device to access the network through the second terminal device, sending, by the network device, a third message to the unified data management network element, the unified data repository network element, or the policy control network element, so that the unified data management network element, the unified data repository network element, or the policy control network element updates, based on the third message, the quantity of relay devices currently connected to the first terminal device and/or the AMBR currently used by the first terminal device for a relay, wherein the third message indicates that the network device allows the first terminal device to access the network through the second terminal device.

11. The method according to claim 10, wherein the third message comprises the identifier of the second terminal device.

12. The method according to claim 7 or 8, wherein the method further comprises:
if the network device disallows the first terminal device to access the network through the second terminal device, sending, by the network device, a fourth message to the first terminal device or the second terminal device, wherein the fourth message indicates that the network device disallows the first terminal device to access the network through the second terminal device.

13. The method according to claim 12, wherein the fourth message comprises a failure cause value, and the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

14. The method according to any one of claims 1 to 13, wherein the relay limitation information comprises first relay limitation information and second relay limitation information, the first relay limitation information comprises a quantity of relay devices that can be connected to the first terminal device when the first terminal device performs a first service and/or an AMBR that can be used by the first terminal device for a relay when the first terminal device performs the first service, and the second relay limitation information comprises a quantity of relay devices that can be connected to the first terminal device when the first terminal device performs a second service and/or an AMBR that can be used by the first terminal device for a relay when the first terminal device performs the second service.

15. The method according to any one of claims 1 to 14, wherein the network device is an access and mobility management network element of the first terminal device, a session management network element of the first terminal device, an access and mobility management network element of the second terminal device, or a session management network element of the second terminal device.

16. A relay management method, comprising:
receiving a second message from a network device, wherein the second message is for requesting relay limitation information of a first terminal device, and the second message comprises an identifier of the first terminal device; and
sending the relay limitation information of the first terminal device to the network device, wherein the relay limitation information indicates a quantity of relay devices that can be connected to the first terminal device and/or an aggregate maximum bit rate AMBR that can be used by the first terminal device for a relay.

17. The method according to claim 16, wherein the method further comprises:
sending, to the network device, a quantity of relay devices currently connected to the first terminal device and/or an AMBR currently used by the first terminal device for a relay.

18. The method according to claim 16 or 17, wherein the method further comprises:
receiving, from the network device, an updated quantity of relay devices currently connected to the first terminal device and/or an updated AMBR currently used by the first terminal device for a relay.

19. The method according to claim 16 or 17, wherein the method further comprises:
receiving a third message from the network device, wherein the third message indicates that the network device allows the first terminal device to access a network through a second terminal device; and
in response to the third message, updating the quantity of relay devices currently connected to the first terminal device and/or the AMBR currently used by the first terminal device for a relay.

20. A relay management method, comprising:
receiving, by an access network device, a seventh message from a first terminal device, wherein the seventh message indicates that the first terminal device requests to access a network through a second terminal device, and the second terminal device is a relay device of the first terminal device;
obtaining, by the access network device, relay limitation information of the first terminal device, wherein the relay limitation information indicates a quantity of relay devices that can be connected to the first terminal device and/or an aggregate maximum bit rate AMBR that can be used by the first terminal device for a relay; and
determining, by the access network device based on the seventh message and the relay limitation information of the first terminal device, whether to allow the first terminal device to access the network through the second terminal device.

21. The method according to claim 20, wherein the determining, by the access network device based on the seventh message and the relay limitation information of the first terminal device, whether to allow the first terminal device to access the network through the second terminal device, wherein the second terminal device is a relay device of the first terminal device comprises:
if a quantity of relay devices currently connected to the first terminal device does not exceed the quantity of relay devices that can be connected to the first terminal device, allowing, by the access network device based on the seventh message, the first terminal device to access the network through the second terminal device; or if a quantity of relay devices currently connected to the first terminal device is equal to the quantity of relay devices that can be connected to the first terminal device, disallowing, by the access network device based on the seventh message, the first terminal device to access the network through the second terminal device; and/or
if an AMBR currently used by the first terminal device for a relay does not exceed the AMBR that can be used by the first terminal device for a relay, allowing, by the access network device based on the seventh message, the first terminal device to access the network through the second terminal device; or if an AMBR currently used by the first terminal device for a relay is equal to the AMBR that can be used by the first terminal device for a relay, disallowing, by the access network device based on the seventh message, the first terminal device to access the network through the second terminal device.

22. The method according to claim 20 or 21, wherein the method further comprises:
if the access network device allows the first terminal device to access the network through the second terminal device, sending, by the access network device, an eighth message to a network device, wherein the eighth message is for requesting to establish or modify a PDU session of the first terminal device.

23. The method according to claim 20 or 21, wherein the method further comprises:
if the access network device disallows the first terminal device to access the network through the second terminal device, sending, by the access network device, a ninth message to the first terminal device, wherein the ninth message indicates that the access network device disallows the first terminal device to access the network through the second terminal device.

24. The method according to claim 23, wherein the ninth message comprises a failure cause value, and the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

25. A communication apparatus, comprising:
a processing unit, configured to: obtain an identifier of a first terminal device, and obtain relay limitation information of the first terminal device based on the identifier of the first terminal device, wherein the relay limitation information indicates a quantity of relay devices that can be connected to the first terminal device and/or an aggregate maximum bit rate AMBR that can be used by the first terminal device for a relay; and
determine, based on the relay limitation information of the first terminal device, whether to allow the first terminal device to access a network through a second terminal device, wherein the second terminal device is a relay device of the first terminal device.

26. The apparatus according to claim 25, further comprising a communication unit, wherein
the communication unit is configured to receive a first message from the first terminal device, wherein the first message comprises the identifier of the first terminal device and an identifier of the second terminal device, or the first message comprises an identifier of the second terminal device; and the first message indicates that the first terminal device requests to access the network through the second terminal device.

27. The communication apparatus according to claim 25, further comprising a communication unit, wherein
the communication unit is configured to receive a first message from the second terminal device, wherein the first message comprises the identifier of the first terminal device and an identifier of the second terminal device, or the first message comprises the identifier of the first terminal device; and the first message indicates that the first terminal device requests to access the network through the second terminal device.

28. The apparatus according to claim 26 or 27, wherein
the processing unit is configured to: in response to the first message, send a second message to a unified data management network element, a unified data repository network element, or a policy control network element through the communication unit, wherein the second message is for requesting the relay limitation information of the first terminal device, and the second message comprises the identifier of the first terminal device; and
receive the relay limitation information of the first terminal device from the unified data management network element, the unified data repository network element, or the policy control network element through the communication unit.

29. The apparatus according to any one of claims 25 to 28, wherein
the communication unit is further configured to send the relay limitation information to the first terminal device.

30. The apparatus according to any one of claims 25 to 28, wherein
the communication unit is further configured to send the relay limitation information to an access network device, wherein the access network device is connected to the first terminal device and/or the second terminal device.

31. The apparatus according to any one of claims 25 to 28, wherein the processing unit is specifically configured to: if a quantity of relay devices currently connected to the first terminal device does not exceed the quantity of relay devices that can be connected to the first terminal device, allow the first terminal device to access the network through the second terminal device; or if a quantity of relay devices currently connected to the first terminal device is equal to the quantity of relay devices that can be connected to the first terminal device, disallow the first terminal device to access the network through the second terminal device; and/or
if an AMBR currently used by the first terminal device for a relay does not exceed the AMBR that can be used by the first terminal device for a relay, allow the first terminal device to access the network through the second terminal device; or if an AMBR currently used by the first terminal device for a relay is equal to the AMBR that can be used by the first terminal device for a relay, disallow the first terminal device to access the network through the second terminal device.

32. The apparatus according to claim 31, wherein the processing unit is configured to obtain, from the unified data management network element, the unified data repository network element, or the policy control network element through the communication unit, the quantity of relay devices currently connected to the first terminal device and/or the AMBR currently used by the first terminal device for a relay.

33. The apparatus according to claim 31 or 32, wherein the processing unit is further configured to: if the first terminal device is allowed to access the network through the second terminal device, update the quantity of relay devices currently connected to the first terminal device and/or the AMBR currently used by the first terminal device for a relay; and
send, to the unified data management network element, the unified data repository network element, or the policy control network element through the communication unit, an updated quantity of relay devices currently connected to the first terminal device and/or an updated AMBR currently used by the first terminal device for a relay.

34. The apparatus according to claim 31 or 32, wherein the processing unit is further configured to: if the first terminal device is allowed to access the network through the second terminal device, send a third message to the unified data management network element, the unified data repository network element, or the policy control network element through the communication unit, so that the unified data management network element, the unified data repository network element, or the policy control network element updates, based on the third message, the quantity of relay devices currently connected to the first terminal device and/or the AMBR currently used by the first terminal device for a relay, wherein the third message indicates that a network device allows the first terminal device to access the network through the second terminal device.

35. The apparatus according to claim 34, wherein the third message comprises the identifier of the second terminal device.

36. The apparatus according to claim 31 or 32, wherein the processing unit is further configured to: if the first terminal device is disallowed to access the network through the second terminal device, send a fourth message to the first terminal device or the second terminal device through the communication unit, wherein the fourth message indicates that a network device disallows the first terminal device to access the network through the second terminal device.

37. The apparatus according to claim 36, wherein the fourth message comprises a failure cause value, and the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

38. The apparatus according to any one of claims 25 to 37, wherein the relay limitation information comprises first relay limitation information and second relay limitation information, the first relay limitation information comprises a quantity of relay devices that can be connected to the first terminal device when the first terminal device performs a first service and/or an AMBR that can be used by the first terminal device for a relay when the first terminal device performs the first service, and the second relay limitation information comprises a quantity of relay devices that can be connected to the first terminal device when the first terminal device performs a second service and/or an AMBR that can be used by the first terminal device for a relay when the first terminal device performs the second service.

39. The apparatus according to any one of claims 25 to 38, wherein the communication apparatus is an access and mobility management network element of the first terminal device, a session management network element of the first terminal device, an access and mobility management network element of the second terminal device, or a session management network element of the second terminal device.

40. A communication apparatus, comprising:
a processing unit, configured to: receive a second message from a network device through a communication unit, wherein the second message is for requesting relay limitation information of a first terminal device, and the second message comprises an identifier of the first terminal device; and
send the relay limitation information of the first terminal device to the network device through the communication unit, wherein the relay limitation information indicates a quantity of relay devices that can be connected to the first terminal device and/or an aggregate maximum bit rate AMBR that can be used by the first terminal device for a relay.

41. The apparatus according to claim 40, wherein the processing unit is further configured to send, to the network device through the communication unit, a quantity of relay devices currently connected to the first terminal device and/or an AMBR currently used by the first terminal device for a relay.

42. The apparatus according to claim 40 or 41, wherein the processing unit is further configured to receive, from the network device through the communication unit, an updated quantity of relay devices currently connected to the first terminal device and/or an updated AMBR currently used by the first terminal device for a relay.

43. The apparatus according to claim 41 or 42, wherein the processing unit is further configured to receive a third message from the network device through the communication unit, wherein the third message indicates that the network device allows the first terminal device to access a network through a second terminal device; and
the processing unit is further configured to: in response to the third message, update the quantity of relay devices currently connected to the first terminal device and/or the AMBR currently used by the first terminal device for a relay.

44. A communication apparatus, comprising:
a communication unit, configured to receive a seventh message from a first terminal device, wherein the seventh message indicates that the first terminal device requests to access a network through a second terminal device, and the second terminal device is a relay device of the first terminal device; and
a processing unit, configured to: obtain relay limitation information of the first terminal device, wherein the relay limitation information indicates a quantity of relay devices that can be connected to the first terminal device and/or an aggregate maximum bit rate AMBR that can be used by the first terminal device for a relay; and
determine, based on the seventh message and the relay limitation information of the first terminal device, whether to allow the first terminal device to access the network through the second terminal device.

45. The apparatus according to claim 44, wherein
the processing unit is specifically configured to: if a quantity of relay devices currently connected to the first terminal device does not exceed the quantity of relay devices that can be connected to the first terminal device, allow, based on the seventh message, the first terminal device to access the network through the second terminal device; or if a quantity of relay devices currently connected to the first terminal device is equal to the quantity of relay devices that can be connected to the first terminal device, disallow, based on the seventh message, the first terminal device to access the network through the second terminal device; and/or
if an AMBR currently used by the first terminal device for a relay does not exceed the AMBR that can be used by the first terminal device for a relay, allow, for an access network device based on the seventh message, the first terminal device to access the network through the second terminal device; or if an AMBR currently used by the first terminal device for a relay is equal to the AMBR that can be used by the first terminal device for a relay, disallow, for an access network device based on the seventh message, the first terminal device to access the network through the second terminal device.

46. The apparatus according to claim 44 or 45, wherein
the communication unit is further configured to: if the first terminal device is allowed to access the network through the second terminal device, send an eighth message to a network device, wherein the eighth message is for requesting to establish or modify a PDU session of the first terminal device.

47. The apparatus according to claim 44 or 45, wherein
the communication unit is further configured to: if the first terminal device is disallowed to access the network through the second terminal device, send a ninth message to the first terminal device, wherein the ninth message indicates that the access network device disallows the first terminal device to access the network through the second terminal device.

48. The apparatus according to claim 47, wherein the ninth message comprises a failure cause value, and the failure cause value indicates that a failure cause is that the quantity of relay devices currently connected to the first terminal device is equal to the quantity of relay devices that can be connected to the first terminal device or the AMBR currently used by the first terminal device for a relay is equal to the AMBR that can be used by the first terminal device for a relay.

49. A communication apparatus, comprising a processor, wherein the processor is coupled to a memory;
the memory is configured to store a computer program; and
the processor is configured to execute the computer program stored in the memory, to enable the apparatus to perform the method according to any one of claims 1 to 24.

50. A computer-readable storage medium, comprising a program or instructions, wherein when the program or the instructions are run by a processor, the method according to any one of claims 1 to 24 is performed.

51. A computer program product, wherein the computer program product comprises instructions; and when the instructions are executed, the method according to any one of claims 1 to 24 is performed.

52. A chip, wherein the chip comprises a processor and an interface circuit, the interface circuit is coupled to the processor, and the processor is configured to run a computer program or instructions, so that the method according to any one of claims 1 to 24 is performed.

53. A communication system, wherein the communication system comprises the communication apparatus according to any one of claims 25 to 28 or any one of claims 31 to 39 and the communication apparatus according to any one of claims 40 to 43.

54. A communication system, wherein the communication system comprises the communication apparatus according to claim 29 or 30 and the communication apparatus according to any one of claims 44 to 48.
